# EUROPÄISCHE PATENTSCHRIFT

(11) **EP 2 673 219 B1**
(45) Veröffentlichungstag und Bekanntmachung des Hinweises auf die Patenterteilung: **28.03.2018**
(21) Anmeldenummer: 12712541.7
(22) Anmeldetag: 07.02.2012
(51) Int. Cl.: B65G 1/04

(54) **REGALLAGERSYSTEM UND VERFAHREN ZUM BETREIBEN DESSELBEN**
RACK STORE SYSTEM AND METHOD FOR OPERATING IT
SYSTÈME D'ENTREPÔT À RAYONNAGES ET PROCÉDÉ DE FONCTIONNEMENT CORRESPONDANT

(30) Priorität: 08.02.2011 AT 1652011; 08.07.2011 AT 10062011
(43) Veröffentlichungstag der Anmeldung: 18.12.2013
(73) Patentinhaber: TGW Mechanics GmbH, 4600 Wels (AT)
(72) Erfinder: WOLKERSTORFER, Christoph, A-4600 Wels (AT); ANGLEITNER, Karl, A-4600 Wels (AT)
(74) Vertreter: Burger, Hannes
(86) Internationale Anmeldenummer: PCT/AT2012/050018
(87) Internationale Veröffentlichungsnummer: WO 2012/106746

(56) Entgegenhaltungen:
- DE-A1- 2 113 202
- DE-A1-102009 032 406
- JP-A- 6 156 630

## Beschreibung

Die Erfindung betrifft ein Regallagersystem nach dem Oberbegriff des Anspruchs 1 und ein Verfahren zum automatisierten Betreiben desselben. Ein solches Regallagersystem ist bereits aus der DE 10 2009 032 406 A1 bekannt.

Die DE 2 113 202 A1, EP 1716 060 B1 und DE 10 2009 032 406 A1 offenbaren Regallagersysteme, bei denen eine Ladegut-Hebevorrichtung zum Transport von Ladegütern zwischen den Regalebenen und eine Förderfahrzeug-Hebevorrichtung zum Transport des Förderfahrzeuges zwischen den Regalebenen angeordnet sind. Während nach der DE 2 113 202 A1 und EP 1 716 060 B1 die Förderfahrzeug-Hebevorrichtung stationär vor der Regalgasse angeordnet sind, kann nach der Ausführung gemäß der DE 10 2009 032 406 A1 die Förderfahrzeug-Hebevorrichtung entlang einer Regallagerseite verfahren und ein Förderfahrzeug zwischen Regalgassen umsetzen.

Nach der DE 2 113 202 A1 ist es vorgesehen, dass die Förderfahrzeuge zu Wartungs- bzw. Reparaturzwecke auf der Vorzonen-Fördertechnik (Auslagerungsstrecke) aufgestaut werden, um von dort abgenommen zu werden, oder zur Leistungssteigerung des Regallagersystems auf der Vorzonen-Fördertechnik (Einlagerungsstrecke) eingebracht werden, um in das Regallager eingeschleust zu werden. Dadurch wird die Vorzonen-Fördertechnik, auf der auch die Ladegüter, welche in das Regallager einzulagern und welche aus dem Regallager gemäß einem Kommissionierauftrag auszulagern sind, transportiert werden, blockiert, sodass darunter die Effizienz des Regallagersystems leidet. Zwar können bei hoher Umschlagleistung zusätzlich Förderfahrzeuge in das Regallager eingebracht werden, ergeben sich aber dennoch dieselben Nachteile, wie beschrieben.

Aus der JP 06-156630 A ist ein Regallagersystem bekannt, welches ein Regallager mit benachbart zueinander angeordneten Lagerregalen und zwischen diesen ausgebildeten Regalgassen, und in übereinander liegenden Regalebenen entlang der Regalgassen verlaufenden Führungsbahnen für Förderfahrzeuge zum Transport der Ladegüter, je Regalgasse eine Förderfahrzeug-Hebevorrichtung sowie ein Führungsbahnsystem umfasst. Die Förderfahrzeug-Hebevorrichtung umfasst eine durch einen Hubantrieb heb- und senkbare Aufnahmevorrichtung zum Antransport/Abtransport der Förderfahrzeuge. Das Führungsbahnsystem umfasst je Regalgasse eine erste Führungsbahn, welche an eine zu diesen quer verlaufende gemeinsame Förderfahrzeug-Verteilerbahn anschließt, wobei entlang der Förderfahrzeug-Verteilerbahn mehrere Arbeitsstationen angeordnet sind. Das Förderfahrzeug kann über die ersten Führungsbahnen zwischen der Förderfahrzeug-Verteilerbahn und der Förderfahrzeug-Hebevorrichtung je Regalgasse sowie zwischen den ersten Führungsbahnen und den Arbeitsstationen verfahren.

Der Erfindung liegt die Aufgabe zugrunde ein Regallagersystem und ein Verfahren zum Betreiben desselben vorzusehen, das sich gegenüber den bekannten Regallagersystemen und Verfahren noch effizienter betreiben lässt.

Die Aufgabe der Erfindung wird durch das Regallagersystem nach Anspruch 1 gelöst. Dadurch ist es nun möglich, die Manipulation (Einlagerung und Auslagerung) von Ladegütern entkoppelt von der Umsetzbewegung eines Förderfahrzeuges zwischen dem Puffersystem und einer Aufnahmevorrichtung zu gestalten. Somit kann durch die Aufnahmevorrichtung ein Förderfahrzeug nicht nur zu jeder beliebigen Regalebene und damit zu jeder beliebigen Führungsbahn transportieren werden, sondern auch auf einem Höhenniveau einer Übergabeebene entweder an das Puffersystem abgegeben oder von dem Puffersystem übernommen werden. Die Übernahme/Übergabe eines Förderfahrzeuges (ohne Ladegut) kann zu einem von der Steuerungsvorrichtung ermittelten Zeitintervall erfolgen, in dem die Aufnahmevorrichtung nicht mit dem Umsetzen eines Förderfahrzeuges (mit oder ohne Ladegut) von einer Regalebene auf die andere Regalebene beschäftigt ist. Dadurch hat der Wechselvorgang, bei dem beispielsweise ein Förderfahrzeug aus dem Regallager durch ein Förderfahrzeug aus dem Puffersystem ersetzt wird, kaum eine Auswirkung auf die hohe Effizienz des Regallagersystems. Zudem wird eine hohe Verfügbarkeit für das Regallagersystem erreicht.

Vorteilhafte Ausgestaltungen und Weiterbildungen der Erfindung ergeben sich aus den Unteransprüchen sowie aus der Beschreibung in Zusammenschau mit den Figuren.

Eine sehr platzsparende Ausbildung des Puffersystems und Aufnahmekapazität für mehrere Förderfahrzeuge wird erreicht, wenn der Tragrahmen in übereinander liegenden Horizontalebenen verlaufende Führungsbahnen umfasst. Die Führungsbahnen umfassen jeweils mit gegenseitigem Abstand parallel verlaufende Führungsschienen. Darüber hinaus kann in einer der Horizontalebenen ein Förderfahrzeug zwischen dem Puffersystem und der Aufnahmevorrichtung umgesetzt werden und in einer anderen der Horizontalebenen unter Einhaltung der sicherheitstechnischen Aspekte Wartungsarbeiten durch eine Bedienperson durchgeführt werden.

Das Puffersystem kann stationär vor der Förderfahrzeug-Hebevorrichtung und getrennt von der Aufnahmevorrichtung derart aufgestellt werden, dass die Aufnahmevorrichtung nur in einem geringem Spaltabstand von wenigen Millimeter an den Stirnkanten der Führungsbahn(en) des Tragrahmens vorbeibewegt werden kann. Indem das Puffersystem stationär aufgestellt ist, kann der Handhabungsaufwand für die Bedienperson, beispielsweise für Wartungsarbeiten verringert werden. Auch ist eine Unterbrechung des Automatikbetriebes zumindest der Förderfahrzeug-Hebevorrichtung nicht nötig.

Ist hingegen das Puffersystem mobil, kann das Förderfahrzeug auch als mobiler Arbeitsplatz verwendet werden, welcher mehrere Wartungsstationen durchlaufen kann. Auch nach dieser Ausführung ist die Aufnahmevorrichtung in einer Andockposition derart positioniert, dass die Aufnahmevorrichtung nur in einem geringem Spaltabstand von wenigen Millimeter an den Stirnkanten der Führungsbahn(en) des Tragrahmens vorbeibewegt werden kann.

Eine einfache und exakte Positionierung eines mobilen Puffersystems relativ zur Aufnahmevorrichtung wird erreicht, wenn der Tragrahmen und die Förderfahrzeug-Hebevorrichtung, insbesondere der Tragrahmen miteinander in Eingriff bringbare Kupplungselemente umfasst, mittels welchen das Puffersystem relativ gegenüber der Aufnahmevorrichtung positionierbar und in einer Andockposition arretierbar ist. Zudem wird dadurch eine sanfte Übergabebewegung eines Förderfahrzeuges zwischen der Aufnahmevorrichtung und dem Puffersystem ermöglicht.

Umfasst das Puffersystem zumindest ein Verriegelungselement, kann das Förderfahrzeug in seiner Pufferposition auf der Führungsbahn arretiert werden. Dadurch wird sichergestellt, dass bei Wartungsarbeiten am Förderfahrzeug, welches sich am stationären Puffersystem befindet, oder bei dem Transport des Förderfahrzeuges, welches sich am mobilen Puffersystem befindet, dieses zuverlässig in der Pufferposition verharrt.

Eine automatische Übergabebewegung durch den Fahrantrieb eines selbstfahrenden Förderfahrzeuges zwischen der Aufnahmevorrichtung und dem Puffersystem wird ermöglicht, wenn das Puffersystem zumindest ein Energie- und/oder Datenversorgungssystem umfasst. Dadurch können zusätzliche Beladungs- und/oder Entladungsvorrichtung, beispielsweise Schieber, im Vorzonenbereich entfallen.

Günstig ist es, wenn an die Steuerungsvorrichtung ein Steuerungsmittel angeschlossen ist, durch welches an die Steuerungsvorrichtung ein elektrisches Steuersignal bzw. Schaltbefehl absetzbar und zumindest der Hubantrieb der Aufnahmevorrichtung steuerbar ist. Das Steuerungsmittel ist eine Steuerlogik, insbesondere ein Computerprogramm, oder eine Eingabevorrichtung. Dadurch können einerseits sicherheitstechnische Aspekte für Wartungsarbeiten durch eine Bedienperson berücksichtigt und andererseits mit der Steuerungsvorrichtung durch ein Freischaltsignal kommuniziert werden, dass der erste Betriebsmodus (Umsetzen eines Förderfahrzeuges zwischen der Aufnahmevorrichtung und den Regalebenen) oder zweite Betriebsmodus (Umsetzen eines Förderfahrzeuges zwischen der Aufnahmevorrichtung und dem Puffersystem) begonnen werden kann.

Die Förderfahrzeug-Hebevorrichtung umfasst beidseitig seitlich zur Regalgasse angeordnete vertikale Rahmenteile und die Aufnahmevorrichtung ist mit Führungsorganen an den Rahmenteilen gelagert, wobei die Führungsbahn der Aufnahmevorrichtung parallel in Richtung zur Regalgasse verläuft. Dadurch kann ein Förderfahrzeug ungehindert in der jeweiligen Regalebene zwischen die Rahmenteile von der Aufnahmevorrichtung auf die Regalgasse und umgekehrt hindurchbewegt werden. Auch wird eine optimale Zugangsmöglichkeit in die Regalgasse ermöglicht, wenn Wartungsarbeiten im Regallager erforderlich sind. Die Führungsschienen der Aufnahmevorrichtung verlaufen parallel in Längsrichtung der Regalgasse, daher in Verlängerung zu den Führungsschienen der Regalgasse, wenn die Aufnahmevorrichtung in der jeweiligen Regalebene vor der Regalgasse positioniert wird.

Günstig ist es, wenn das Förderfahrzeug automatisiert zwischen dem Puffersystem und der Aufnahmevorrichtung bewegt wird, wobei die Übergabebewegung für das Förderfahrzeug zwischen dem Puffersystem und der Aufnahmevorrichtung durch die Steuerungsvorrichtung gesteuert wird. Auf diese Weise, wird der Automatisierungsgrad ohne kostenintensive Anschaffungen für Vorrichtungen erhöht und die ergonomischen Bedingungen für die Bedienperson verbessert. Darüber hinaus kann der Wechselvorgang dadurch nochmals beschleunigt und die Effizienz des Regallagersystems verbessert werden.

Wird von der Steuerungsvorrichtung zumindest ein Analyseparameter für das Regallager überwacht, kann auch auf einen Betriebszustand und/oder ein Betriebsverhalten im Regallager aktiv reagiert werden. Beispielsweise kann eine Umschlagleistung von Ladegütern im Regallager, eine Lagerkennzahl von jedem Lagerregal und/oder eine Leistungskennzahl, insbesondere eine Auslastung des/der Förderfahrzeuge(s) in zumindest einer der Regalebenen oder in denjenigen Regalebenen, in welchen sich Förderfahrzeuge befinden, ausgewertet werden.

Anderenfalls kann die Steuerungsvorrichtung auch zumindest einen Analyseparameter für das Förderfahrzeug überwachen. Dadurch kann auf einen Betriebszustand und/oder ein Betriebsverhalten für das Förderfahrzeug reagiert werden. Beispielsweise kann ein Leistungsparameter für den Fahrantrieb und/oder die Feststellbremse, und/oder Anzahl der Stellbewegungen der Lastaufnahmevorrichtung und/oder Reibungswerte und/oder Temperaturkennlinien und dgl., bzw. physikalische Messgrößen, ausgewertet werden.

Vorteilhaft ist es, wenn die Steuerungsvorrichtung in den zweiten Betriebsmodus schaltet und den Hubantrieb für die heb- und senkbare Aufnahmevorrichtung und/oder das Förderfahrzeug ansteuert, sofern ein Istwert-Analyseparameter einen Grenzwert-Analyseparameter erreicht, und das Förderfahrzeug auf das Puffersystem oder umgekehrt bewegt wird. Demnach unterscheiden sich die Stellbewegungen der Aufnahmevorrichtung und/oder Fahrbewegungen des Förderfahrzeuges im zweiten Betriebsmodus zum ersten Betriebsmodus. Das Umschalten zwischen dem ersten Betriebsmodus und zweiten Betriebsmodus basiert auf einem Vergleich zwischen dem Istwert-Analyseparameter und Sollwert (Grenzwert)-Analyseparameter. Wird der Sollwert (Grenzwert)-Analyseparameter erreicht, werden die Aufnahmevorrichtung und/oder das Förderfahrzeug im zweiten Betriebsmodus für die Steuerungsvorrichtung angesteuert. Dementsprechend kann nun ein Förderfahrzeug auf das Puffersystem oder vom Puffersystem bewegt werden. Auf diese Weise ist es nunmehr möglich, dass entsprechend einer Umschlagleistung in zumindest einer der Regalebenen oder in denjenigen Regalebenen, in welchen sich Förderfahrzeuge befinden, die Anzahl der Förderfahrzeuge variieren kann. Bei sehr hoher Auslastung kann auf eine Regalebene zusätzlich zumindest ein vom Puffersystem angefordertes und von der Aufnahmevorrichtung aufgenommenes Förderfahrzeug an die Regalebene abgegeben werden. Auch kann auf eine Regalebene, zusätzlich zu einem dort bereits befindlichen ersten Förderfahrzeug, ein vom Puffersystem angefordertes und von der Aufnahmevorrichtung aufgenommenes zweites Förderfahrzeug abgegeben werden, wobei ein Kollisionsschutz durch die separate Ansteuerung der (selbstfahrenden) Förderfahrzeuge innerhalb der Regalebene sichergestellt wird.

Wird die Übergabebewegung eines Förderfahrzeuges zwischen der Aufnahmevorrichtung und dem Puffersystem durch eine Sensorik, insbesondere optische Sensoren, überwacht, können Störungen unmittelbar von der Steuerungsvorrichtung erfasst und an einer Anzeigevorrichtung angezeigt werden.

Ein Förderfahrzeug, welches vom Puffersystem in das Regallager übergeben wird, wird von der Steuerungsvorrichtung erfasst und ihm eine unverwechselbare Identifikation zugewiesen. Auf diese Weise ist eine eindeutige Nachverfolgbarkeit für das Förderfahrzeug möglich, womit beispielsweise basierend auf der Vergabe einer Systemnummer Wartungspläne für das Förderfahrzeug erstellt werden können.

Es kann sich auch als günstig erweisen, wenn von der Steuerungsvorrichtung für ein Förderfahrzeug, welches vom Puffersystem in das Regallager übergeben wird, ein Wartungsintervall berechnet wird. Das Wartungsintervall wird basierend auf Betriebsdaten, wie Betriebsstundenaufzeichnung, Lastgewicht, Dynamik etc., berechnet.

Auch ist es von Vorteil, wenn die Steuerungsvorrichtung Wartungsintervalle für das Förderfahrzeug definiert und entsprechend dem Wartungsintervall das Förderfahrzeug im zweiten Betriebsmodus derart ansteuert, dass das Förderfahrzeug über die Aufnahmevorrichtung vom Regallager in das Puffersystem bewegt wird. Demnach wird ein Förderfahrzeug unabhängig vom tatsächlichen Betriebszustand, beispielsweise Verschleißerscheinungen, in das Puffersystem ausgeschleust, um Wartungsarbeiten am Förderfahrzeug durchführen zu können. Die Wartungsarbeiten werden entkoppelt vom Automatikbetrieb des Regallagersystems durchgeführt und damit Stillstandzeiten vermieden. Ferner kann ein Förderfahrzeug auf einem ergonomisch gestalteten Arbeitsplatz (Stellplatz) unter Zuhilfenahme von speziell angefertigten Werkzeugen einfach und schnell gewartet werden und bereits nach kurzer Instandhaltungszeit über das Puffersystem/Aufnahmevorrichtung wieder zurück in das Regallager eingeschleust werden.

Zum besseren Verständnis der Erfindung wird diese anhand der nachfolgenden Figuren näher erläutert.

Es zeigen jeweils in stark schematisch vereinfachter Darstellung:
- Fig. 1: ein Regallagersystems mit einer Detailansicht auf die erste Regallagerseite, in perspektivischer Ansicht;
- Fig. 2: einen Ausschnitt des Regallagersystems nach Fig. 1 mit einer Detailansicht auf die zweite Regallagerseite, in perspektivischer Ansicht;
- Fig. 3: ein Ausführungsbeispiel für ein Förderfahrzeug des Regallagersystems nach Fig. 1, in perspektivischer Ansicht;
- Fig. 4: eine Förderfahrzeug-Hebevorrichtung und eine erste Ausführung eines Puffersystems, in perspektivischer Ansicht;
- Fig. 5: eine Draufsicht auf einen Ausschnitt der Förderfahrzeug-Hebevorrichtung und des Puffersystems nach Fig. 4;
- Fig. 6: eine Förderfahrzeug-Hebevorrichtung und eine zweite Ausführung eines Puffersystems, in perspektivischer Ansicht;
- Fig. 7: eine Draufsicht auf einen Ausschnitt des Regallagersystems und das Puffersystem sowie das Steuerungssystem.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

In den Fig. ist ein Regallagersystem 1 gezeigt, welches ein Regallager 2 für Ladegüter 3, zumindest ein selbstfahrendes Förderfahrzeug 4, eine Ladegut-Hebevorrichtung 5 und eine Förderfahrzeug-Hebevorrichtung 6 umfasst. Das Regallager 2 weist in einem Abstand parallel angeordnete Lagerregale 7a, 7b auf, zwischen denen sich eine Regalgasse 8 ausgehend von einer ersten Regallagerseite 9 zu einer zweiten Regallagerseite 10 erstreckt und welche in übereinander liegenden Regalebenen 11 jeweils nebeneinander vorgesehene Stellplätze 12 für die Ladegüter 3 ausbilden. Nach gezeigter Ausführung bilden die Lagerregale 7a, 7b in den Regalebenen 11 jeweils nebeneinander und hintereinander vorgesehene Stellplätze 12 für die Ladegüter 3 aus, sodass in Tiefenrichtung der Lagerregale 7a, 7b zwei Ladegüter 3 abgestellt werden können, daher eine so genannte "doppelttiefe" Lagerung möglich ist. Andererseits ist es auch möglich, dass die Lagerregale 7a, 7b in den Regalebenen 11 jeweils ausschließlich in einer Reihe nebeneinander vorgesehene Stellplätze 12 für die Ladegüter 3 ausbilden, sodass in Tiefenrichtung der Lagerregale 7a, 7b nur ein Ladegut 3 abgestellt werden kann, daher eine so genannte "einfachtiefe" Lagerung möglich ist.

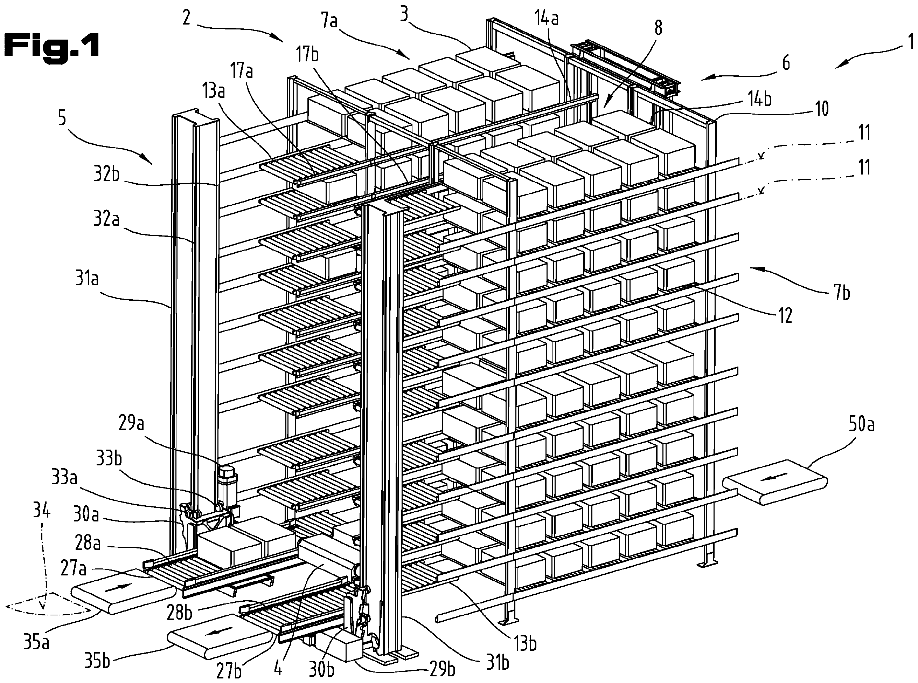

Wie in Fig. 1 ersichtlich, kann das Regallagersystem 1 auf der ersten Regallagerseite 9 zusätzlich eine Pufferzone umfassen, die jeweils den Regalebenen 11 der Lagerregale 7a, 7b vorgelagert in einer Reihe Pufferplätze 13a, 13b für zumindest ein Ladegut 3 aufweist. Die Pufferplätze 13a, 13b sind jeweils auf einer antreibbaren Förderbahn, beispielsweise einer Transportvorrichtung, wie Staurollenbahn, Staugurtförderer und dgl. gebildet, dessen Förderrichtung parallel zur Regalgasse 8 verläuft.

In jeder Regalebene 11 erstrecken sich entlang der Regalgasse 8 zumindest von der ersten Regallagerseite 9 bis über die zweite Regallagerseite 10 hinweg erste Führungsschienen 14a, 14b, entlang deren das Förderfahrzeug 4 (Shuttle) geführt bewegbar ist, um Ladegüter 3, wie beispielsweise Behälter, Kartonagen, Tablare und dgl. zu den in den Regalebenen 11 der Lagerregale 7a, 7b jeweils vorgesehenen Stellplätzen 12 anzutransportieren und von den in den Regalebenen 11 der Lagerregale 7a, 7b jeweils vorgesehenen Stellplätzen 12 abzutransportieren. Die in der jeweiligen Regalebene 11 einander gegenüberliegenden Führungsschienen 14a, 14b bilden jeweils eine erste Führungsbahn.

Die horizontalen ersten Führungsschienen 14a, 14b sind in den Regalebenen 11 jeweils an den Lagerregalen 7a, 7b befestigt und bilden je eine Höhenführungsbahn 15 und je eine Seitenführungsbahn 16 aus.

Sind die Pufferplätze 13a, 13b vor jedem Lagerregal 7a, 7b zu beiden Seiten der Regalgasse 8 vorgesehen, sind auch in der ersten Vorzone des Regallagers 2 in jeder Regalebene 11 unmittelbar in der Verlängerung der ersten Führungsschienen 14a, 14b im Regallager 2 zweite Führungsschienen 17a, 17b vorgesehen, sodass das Förderfahrzeug 4 (Shuttle) auch zwischen den, auf Höhe der Regalebenen 11 einander gegenüberliegenden Pufferplätzen 13a, 13b geführt bewegbar ist, um Ladegüter 3 zu den in den Regalebenen 11 der Lagerregale 7a, 7b jeweils vorgesehenen Pufferplätzen 13a, 13b anzutransportieren und von den in den Regalebenen 11 der Lagerregale 7a, 7b jeweils vorgesehenen Pufferplätzen 13a, 13b abzutransportieren. Die in der jeweiligen Regalebene 11 einander gegenüberliegenden Führungsschienen 17a, 17b bilden jeweils eine zweite Führungsbahn.

Die zweiten Führungsschienen 17a, 17b sind in den Regalebenen 11 jeweils an den Transportvorrichtungen in der Pufferzone befestigt und bilden je eine Höhenführungsbahn 18 und je eine Seitenführungsbahn 19 aus.

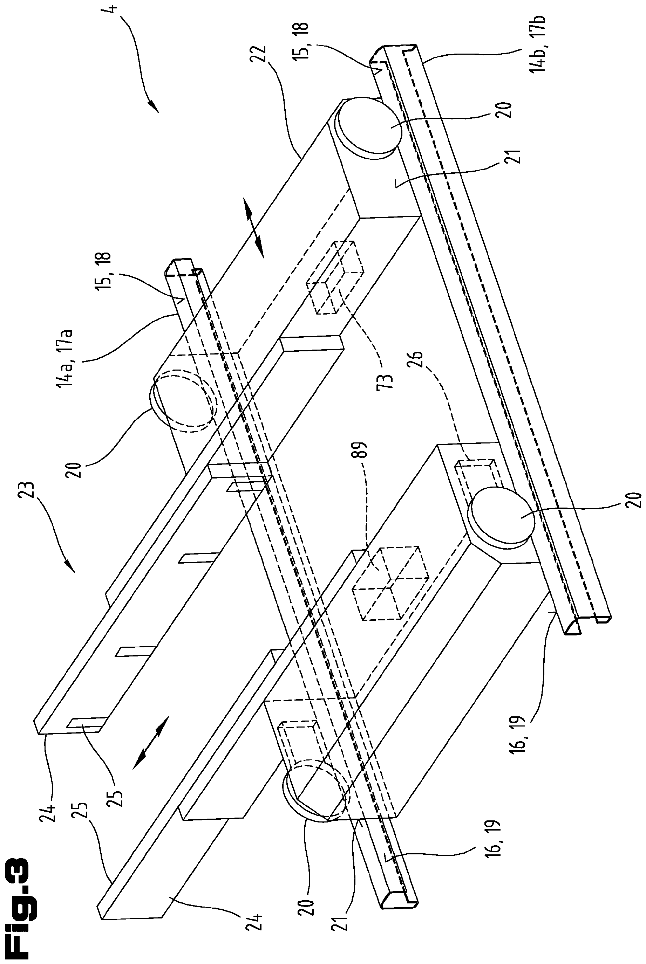

Die Führungsschienen 14a, 14b; 17a, 17b sind beispielsweise U-Profile, C-Profile und dgl. Das Förderfahrzeug 4, wie es in Fig. 3 näher dargestellt ist, weist Antriebsräder 20 auf und kann entlang der Höhenführungsbahnen 15, 18 rollend bewegt werden. Zumindest eines der Antriebsräder 20 ist an einen nicht dargestellten Fahrantrieb, insbesondere einen Elektromotor gekuppelt. Zur Seitenführung des Förderfahrzeuges 4, ist dieses mit Seitenführungsorganen 21 versehen. Beispielsweise sind die Seitenführungsorgane 21 durch am Gehäuserahmen 22 des Förderfahrzeuges 4 ausgebildete parallele Führungsanschlagflächen gebildet, welche zwischen den Seitenführungsbahnen 16, 19 der Führungsschienen 14a, 14b; 17a, 17b positionierbar sind. Das Förderfahrzeug 4 ist ferner mit einer Lastaufnahmevorrichtung 23 zur Einlagerung/Auslagerung/Umlagerung von einem oder gleichzeitig zwei Ladegütern 3 ausgestattet, welche nach gezeigter Ausführung durch in z-Richtung Teleskoparme 24 und jeweils an diesen angeordnete Mitnehmer 25 umfasst. Eine solche Lastaufnahmevorrichtung 23 ist beispielsweise aus der US 2005/0095095 A1 oder EP 0 647 575 A1 bekannt, und kann aufgrund der kompakten Bauweise der Teleskoparme 24 und der zuverlässigen Funktionsweise mit Vorteil eingesetzt werden. In einer vorteilhaften Ausführung kann das Förderfahrzeug 4 mit einer Feststellvorrichtung 26 (Feststellbremse) ausgestattet werden, wie nachfolgend beschrieben. Der Fahrantrieb kann die Feststellbremse ausbilden.

Auf der ersten Regallagerseite 9 ist stirnseitig vor dem Regallager 2 die Ladegut-Hebevorrichtung 5 angeordnet, welche nach gezeigter Ausführung unabhängig voneinander heb- und senkbare Aufnahmevorrichtungen 27a, 27b für Stückgüter 3 aufweist.

Die Aufnahmevorrichtungen 27a, 27b umfassen jeweils eine Transportvorrichtung 28a, 28b mit einer sich parallel zur Regalgasse 8 erstreckenden Förderrichtung, wobei die erste Transportvorrichtung 28a auf einem über einen ersten Hubantrieb 29a vertikal verstellbaren Hubrahmen 30a und eine zweite Transportvorrichtung 28b auf einem über einen zweiten Hubantrieb 29b vertikal verstellbaren Hubrahmen 30b aufgebaut sind.

Nach gezeigter Ausführung ist die erste Transportvorrichtung 28a über den Hubrahmen 30a auf einem ersten Mast 31a und die zweite Transportvorrichtung 28b über den Hubrahmen 30b auf einem zweiten Mast 31b gelagert. Der Mast 31a, 31b ist mit Führungen 32a, 32b versehen, auf welchen die Hubrahmen 30a, 30b mit Führungsrädern 33a, 33b abrollbar aufliegen.

Die Transportvorrichtungen 28a, 28b sind unabhängig (entkoppelt) voneinander zwischen den Regalebenen 11 und auf das Höhenniveau einer jeden Regalebene 11 sowie auf das Höhenniveau einer Fördertechnikebene 34 verstellbar, sodass Ladegüter 3, wie beispielsweise Behälter, Kartonagen, Tablare und dgl., zwischen den Transportvorrichtungen 28a, 28b und Pufferplätzen 13a, 13b sowie zwischen den Transportvorrichtungen 24a, 24b und einer ersten Vorzonen-Fördertechnik gefördert werden können. Vorzugsweise sind die Transportvorrichtungen 28a, 28b jeweils durch eine antreibbare Förderbahn, wie eine Staurollenbahn, Staugurtförderer und dgl. gebildet. Es erweist sich auch von Vorteil, wenn die Transportvorrichtungen 28a, 28b in Förderrichtung hintereinander mehrere Ladegüter 3, vorzugsweise bis zu vier Ladegüter 3 aufnehmen können.

Die erste Vorzonen-Fördertechnik schließt an die Ladegut-Hebevorrichtung 5 an und umfasst eine erste Fördervorrichtung 35a und eine zweite Fördervorrichtung 35b, welche mit gegenseitigem Abstand parallel zueinander verlaufen. Hierbei werden über die erste Fördervorrichtung 35a Ladegüter 3 von der ersten Vorzonen-Fördertechnik zur Ladegut-Hebevorrichtung 5 angefördert und über die zweite Fördervorrichtung 35b Ladegüter 3 von der Ladegut-Hebevorrichtung 5 zur ersten Vorzonen-Fördertechnik abgefördert.

Auf der zweiten Regallagerseite 10 ist stirnseitig vor dem Regallager 2 die Förderfahrzeug-Hebevorrichtung 6 (Umsetzvorrichtung) angeordnet. Die Förderfahrzeug-Hebevorrichtung 6 umfasst einen Führungsrahmen 36, einen Hubrahmen 37 und eine heb- und senkbare Aufnahmevorrichtung 38 für das Förderfahrzeug 4 (Fig. 3).

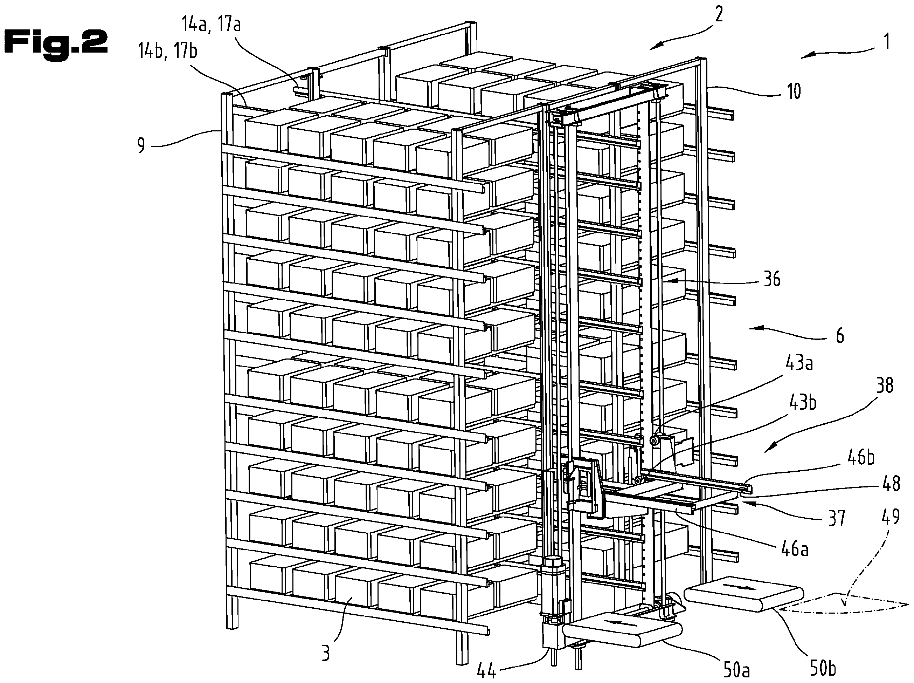

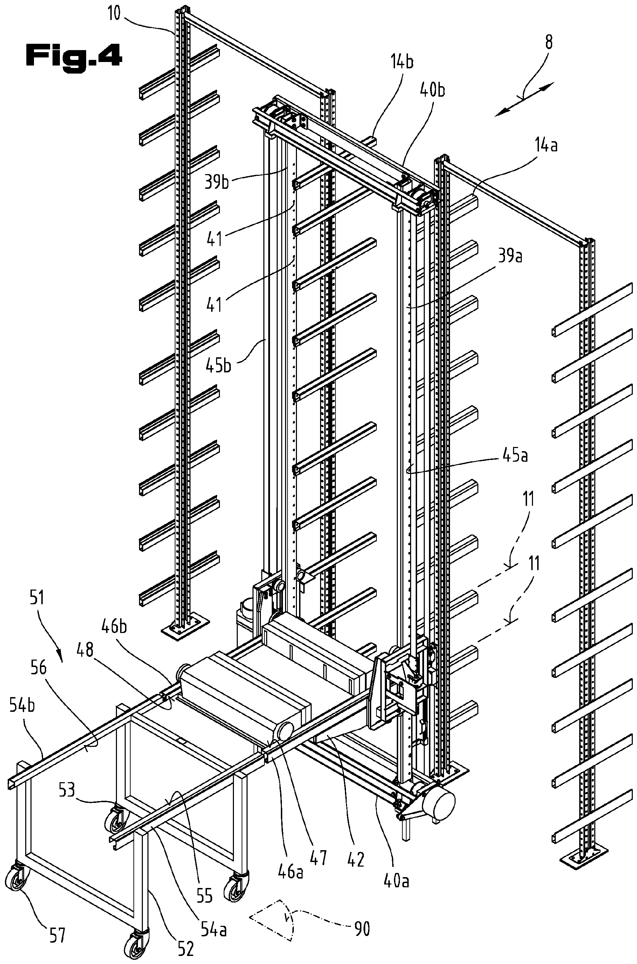

Der Führungsrahmen 36, wie in den Fig. 2 und Fig. 4 näher ersichtlich, weist zu beiden Seiten der Regalgasse 8 angeordnete, vertikale Rahmenteile 39a, 39b, eine diese miteinander verbindende und unterhalb der untersten Regalebene 11 verlaufende untere Traverse 40a sowie eine diese miteinander verbindende und oberhalb der obersten Regalebene 11 verlaufende obere Traverse 40b. Die Rahmenteile 39a, 39b umfassen Führungsbahnen für Führungsorgane 43, 43b und sind erste Formprofile, beispielsweise U-Profile, C-Profile oder in sich geschlossene Rohrprofile mit im Wesentlichen rechteckigem oder trapezförmigem Querschnitt. Die Traversen 40a, 40b sind durch mit gegenseitigem Abstand quer zur Regalgasse 8 verlaufende zweite Formprofile, beispielsweise U-Profile, C-Profile oder in sich geschlossene Rohrprofile mit im Wesentlichen rechteckigem oder trapezförmigem Querschnitt gebildet. Der Abstand ist so gewählt, dass zwischen den einander zugewandten Seitenflächen der zweiten Formprofile der Traversen 40a, 40b die ersten Formprofile der Rahmenteile 39a, 39b aufgenommen werden können. Die Rahmenteile 39a, 39b bzw. ersten Formprofile und die Traversen 40a, 40b bzw. zweiten Formprofile sind über Verbindungselemente entweder lösbar oder über Fügeverbindungen dauerhaft zum formstabilen, verwindungssteifen Führungsrahmen 36 verbunden.

Wie in den Fig. ersichtlich, bilden die Rahmenteile 39a, 39b jeweils sowohl einen Hubführungsabschnitt für den Hubrahmen 37 als auch einen Anbindungsabschnitt für die Befestigung der Führungsschienen 14a, 14b des Regallagers 2 aus.

Der Anbindungsabschnitt zur Befestigung der Führungsschienen 14a, 14b des Regallagers 2 ist durch in Richtung der Längserstreckung am jeweiligen Rahmenteil 39a, 39b in einem Rasterabstand angeordnete Befestigungsmittel 41, beispielsweise durch Befestigungsöffnungen, gebildet. Die Befestigungsmittel 41 sind beispielsweise durch Befestigungsöffnungen, Befestigungszungen, Befestigungsbolzen und dgl. gebildet.

Der Hubrahmen 37 umfasst ein Aufnahmegestell 42 und an diesem gelagerte Führungsorgane 43, 43b, mit welchen sich der Hubrahmen 37 auf den Führungsbahnen abstützt. Bevorzugt sind die Führungsorgane 43a, 43b durch Führungsräder gebildet, welche an den Führungsbahnen abrollbar aufliegen.

Der Hubrahmen 37 ist mit einer Verstellvorrichtung gekoppelt, welche nach gezeigtem Ausführungsbeispiel am Führungsrahmen 36 gelagerte Zugmitteltriebe und zumindest einen Hubantrieb 44 umfasst. Die Zugmitteltriebe umfassen synchron angetriebene, endlos umlaufende Zugmittel 45a, 45b, welche jeweils um ein (oberes) Umlenkrad und ein mit dem Hubantrieb 49 gekuppeltes (unteres) Antriebsrad geführt sind. Das Zugmittel 45a, 45b ist beispielsweise durch einen Zahnriemen, eine Kette oder dgl. gebildet. Der Hubantrieb 44 ist bevorzugt durch einen Elektromotor, insbesondere einen Asynchronmotor, Synchronmotor und dgl., gebildet und am Führungsrahmen 36 gelagert. Durch Drehbewegung der Antriebsräder wird der Hubrahmen 37 und die auf diesem angeordnete Aufnahmevorrichtung 36 relativ zu den Regalebenen 11 in vertikaler Richtung (y-Richtung) bis zu einer von einem Rechnersystem festgelegten y-Position bewegt.

Die Aufnahmevorrichtung 38 umfasst parallel zur Regalgasse 8 (x-Richtung) mit gegenseitigem Abstand horizontal erstreckende Führungsschienen 46a, 46b, die auf dem über den Hubantrieb 44 vertikal verstellbaren Hubrahmen 37 befestigt sind und jeweils eine Höhenführungsbahn 47 und Seitenführungsbahn 48 ausbilden. Die Führungsschienen 46a, 46b sind beispielsweise U-Profile, C-Profile und dgl. gebildet. Das Förderfahrzeug 4 kann über die Antriebsräder 20 entlang der Höhenführungsbahnen 47 rollend bewegt werden. Zur Seitenführung des Förderfahrzeuges 4 dienen die oben beschriebenen Seitenführungsorgane 21, welche zwischen den Seitenführungsbahnen 48 der Fahrschienen 46a, 46b positionierbar sind. Die einander gegenüberliegenden Führungsschienen 46a, 46b bilden eine (mobile) dritte Führungsbahn.

Wie aus dem oben Beschriebenen ersichtlich wird, bildet die Förderfahrzeug-Hebevorrichtung 6 mit dem Führungsrahmen 36, dem Hubrahmen 37, der Verstellvorrichtung für den Hubrahmen 37 und der heb- und senkbaren Aufnahmevorrichtung 38 für das Förderfahrzeug 4 eine eigenständige mechanische und elektrische Baueinheit, wie am besten aus Fig. 4 ersichtlich.

Die Aufnahmevorrichtung 38 kann in einem ersten Betriebsmodus einer Steuerungsvorrichtung 78 zwischen den Regalebenen 11 auf das Höhenniveau einer jeden Regalebene 11 und auf das Höhenniveau einer Fördertechnikebene 49 verstellt werden, sodass Ladegüter 3 auch zwischen der Aufnahmevorrichtung 38 und einer zweiten Vorzonen-Fördertechnik gefördert werden können.

Die zweite Vorzonen-Fördertechnik schließt an die Förderfahrzeug-Hebevorrichtung 6 an und umfasst eine erste Fördervorrichtung 50a und eine zweite Fördervorrichtung 50b, welche mit gegenseitigem Abstand parallel zueinander verlaufen. Die stationären Fördervorrichtungen 50a, 50b sind jeweils durch eine antreibbare Fördervorrichtung, beispielsweise einen Rollenförderer, Gurtförderer und dgl. gebildet. Hierbei werden über die erste Fördervorrichtung 50a Ladegüter 3 von der zweiten Vorzonen-Fördertechnik zur Förderfahrzeug-Hebevorrichtung 6 angefördert und über die zweite Fördervorrichtung 50b Ladegüter 3 von der Förderfahrzeug-Hebevorrichtung 6 zur zweiten Vorzonen-Fördertechnik abgefördert.

Wie in Fig. 4 weiters ersichtlich, umfasst das Regallagersystem 1 zusätzlich zumindest ein Puffersystem 51, welches durch einen Tragrahmen 52 und ein an diesem angeordnetes Fahrgestell 53 gebildet ist. Das Puffersystem 51 ist nach dieser ersten Ausführung ein am Boden verfahrbarer Pufferwagen. Der Tragrahmen 52 ist mit parallel zueinander verlaufenden Führungsschienen 54a, 54b versehen, welche jeweils eine Höhenführungsbahn 55 und Seitenführungsbahn 56 ausbilden. Die Führungsschienen 54a, 54b sind beispielsweise U-Profile, C-Profile und dgl. und entsprechen bevorzugt jener Ausführung, wie sie in Fig. 3 gezeigt ist.

Das Förderfahrzeug 4 kann über die Antriebsräder 20 entlang der Höhenführungsbahnen 51 rollend bewegt werden. Zur Seitenführung des Förderfahrzeuges 4 dienen die oben beschriebenen Seitenführungsorgane 21, welche zwischen den Seitenführungsbahnen 56 der Führungsschienen 54a, 54b positionierbar sind. Die einander gegenüberliegenden Führungsschienen 54a, 54b bilden eine vierte Führungsbahn.

Das Fahrgestell 53 umfasst Stützräder 57, mit welchen das Puffersystem 51 am Boden bewegt werden kann. Sind die Stützräder 57 nicht angetrieben, wird das Puffersystem 51 durch eine Bedienperson in eine (in Fig. 4 gezeigte) Andockposition vor die Förderfahrzeug-Hebevorrichtung 6 manuell geschoben, in welcher das Förderfahrzeug 4 zwischen dem Puffersystem 51 und der Aufnahmevorrichtung 38 manuell oder automatisch umgesetzt wird.

Andererseits ist es auch möglich, dass das Puffersystem 51 einen Fahrantrieb aufweist oder mit einem Fahrantrieb gekoppelt ist und entlang einer Fahrstrecke automatisch in die Andockposition verfahren wird.

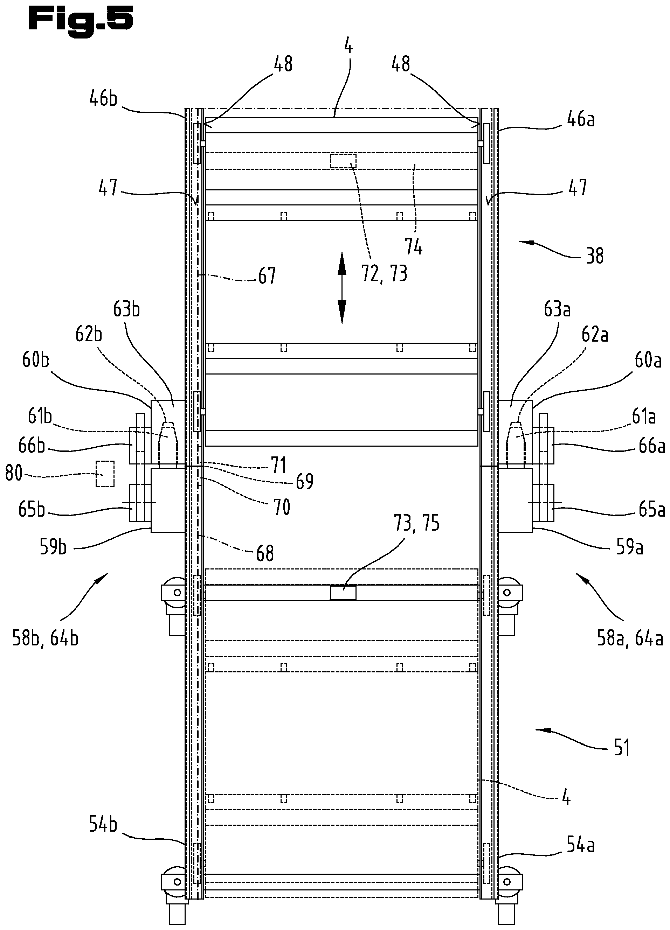

Wie in Fig. 5 dargestellt, kann es sich auch von Vorteil erweisen, wenn das Puffersystem 51 in der Andockposition über mechanische Kupplungsvorrichtungen 58a, 58b relativ gegenüber der Aufnahmevorrichtung 38 positioniert wird. Die Kupplungsvorrichtung 58 umfasst miteinander in Eingriff bringbare Kupplungselemente 59, 60, die das Puffersystem 51 in der Andockposition auch arretieren können. Vorzugsweise handelt es sich um mechanisch betätigbare Kupplungselemente 59a, 59b. Möglich sind auch durch fluidische und/oder elektrische Antriebe betätigbare Kupplungselemente 59a, 59b.

Das Kupplungselement 59a, 59b umfasst nach gezeigtem Ausführungsbeispiel ein bolzenartiges Positionierelement 61a, 61b und das Kupplungselement 60a, 60b eine Aufnahme 62a, 62b. Sowohl das Positionierelement 61a, 61b als auch die Aufnahme 62a, 62b bilden komplementäre Keilflächen, die in der Andockposition eine Positionierung des Puffersystems 51 relativ gegenüber der Aufnahmevorrichtung 38 in senkrechter Richtung auf die Höhenführungsbahn 48 und in senkrechter Richtung auf die Seitenführungsbahn 49 ermöglichen. Die Aufnahme 62a, 62b ist in einem Tragkörper 63a, 63b angeordnet, welcher an den Führungsschienen 46a, 46b befestigt ist.

Zur Arretierung des Puffersystems 51 in der Andockposition sind Arretiervorrichtungen 64a, 64b vorgesehen. Die Kupplungselemente 59a, 59b, 60a, 60b sind hierzu mit miteinander in Eingriff bringbare Arretierelementen 65a, 65b, 66a, 66b ausgebildet. Das Arretierelement 65a, 65b ist beispielsweise ein Schwenkhaken und das Arretierelement 66a, 66b ist beispielsweise ein Rundbolzen. Möglich sind auch durch fluidische und/oder elektrische Antriebe betätigbare Arretierelemente 65a, 65b.

Soll das Puffersystem 51 in der Andockposition positioniert/fixiert werden, werden vorerst die Kupplungselemente 59a, 59b des Puffersystems 51 und die Kupplungselement 60a, 60b der Aufnahmevorrichtung 38 gekuppelt, sodass die Keilflächen aneinander anliegen, und danach die Arretierelemente 65a, 65b, 66a, 66b miteinander verriegelt, sodass die Kupplungs- bzw. Andockposition des Puffersystems 51 relativ zur Aufnahmevorrichtung 38 (lösbar) fixiert ist.

Die Andockposition und damit das sachgemäße mechanische Andocken des Puffersystems 51 mit der Aufnahmevorrichtung 38 kann auch über eine geeignete Sensorik 80, beispielsweise ein Lichtschrankensystem, wie in Fig. 5 schematisch eingetragen, überwacht werden.

Wenngleich einerseits die Arretierelemente 65a, 65b durch die Bedienperson manuell betätigte Arretierelemente 65a, 65b sind, können diese andererseits auch als fluidisch oder elektrisch betätigbare Arretierelemente 65a, 65b gestaltet sein.

Auch wenn in der gezeigten Ausführung je zwei Kupplungsvorrichtungen 58a, 58b und Arretiervorrichtungen 64a, 64b auf einer der Aufnahmevorrichtung 38 benachbarten Seite vorgesehen sind, ist es genauso gut möglich, dass jeweils nur eine Kupplungsvorrichtung 58a, 58b und Arretiervorrichtung 64a, 64b vorhanden sind.

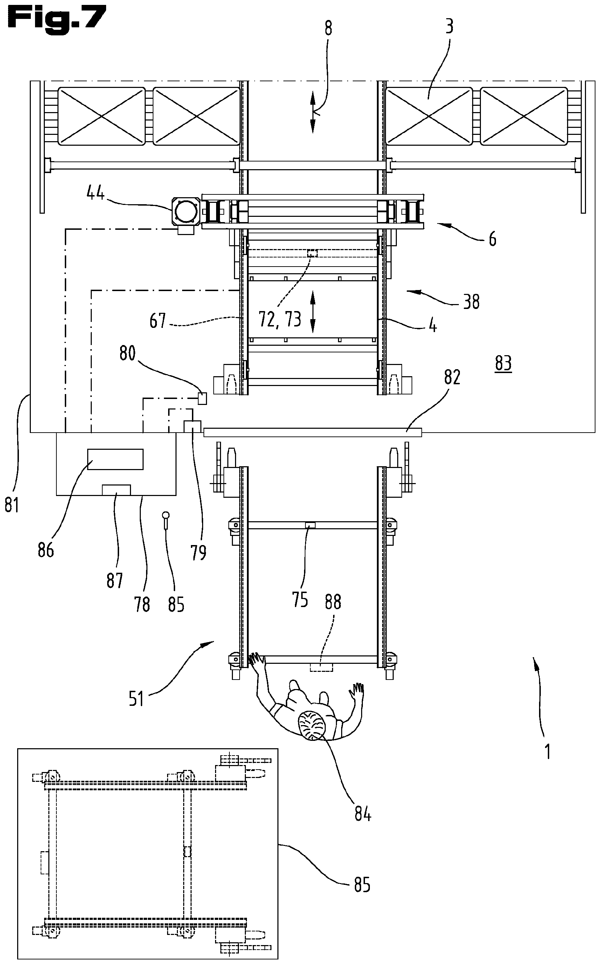

Wie ebenfalls in Fig. 5 dargestellt, kann die Aufnahmevorrichtung 38, insbesondere zumindest eine der Führungsschienen 46a, 46b mit einem Energie- und/oder Datenversorgungssystem 67 (Energie- und Datenbus) und das Puffersystem 51, insbesondere zumindest eine der Führungsschienen 54a, 54b mit einem Energie- und/oder Datenversorgungssystem 68 (Energie- und Datenbus) versehen sein. Dies ist beispielsweise zweckdienlich, wenn das mobile Förderfahrzeug 4 über das Energieversorgungsystem 67, 68 mit elektrischer Energie versorgt und/oder über das Datenversorgungssystem 67, 68 Steuersignale (elektronische Daten) zwischen dem mobilen Förderfahrzeug 4 und einer Steuerungsvorrichtung 78 (Fig. 7) ausgetauscht werden sollen. Das Energie- und/oder Datenversorgungssystem 67 der Förderfahrzeug-Hebevorrichtung 6 ist an die Steuerungsvorrichtung 78 angeschlossen.

Wird das Puffersystem 51 in der Andockposition über die mechanische(n) Kupplungsvorrichtung(en) 58 relativ gegenüber der Aufnahmevorrichtung 38 positioniert und mit der Aufnahmevorrichtung 38 gekuppelt, so können gleichermaßen auch die Energie- und/oder Datenversorgungssysteme 67, 68 über eine Kupplungsvorrichtung 69 verbunden werden. Die Kupplungsvorrichtung 69 umfasst miteinander in Eingriff bringbare elektrische Kupplungselemente 70, 71, beispielsweise Steckkontakte, welche in der Andockposition des Puffersystems 51 die Energie- und/oder Datenversorgungssysteme 67, 68 elektrisch miteinander verbindet.

Möglich ist auch eine Ausführung, nach welcher in der Andockposition elektrische Energie und/oder Steuersignale über Sender- und/oder Empfangseinheiten auf der Aufnahmevorrichtung 38 und dem Puffersystem 51 auf berührungslosem, insbesondere elektromagnetischem Wege übertragen wird. Die Kupplungsvorrichtung 69 ist in diesem Fall eine elektromagnetische Koppelung zwischen dem Energie- und/oder Datenversorgungssysteme 67 der Aufnahmevorrichtung 38 und dem Energie- und/oder Datenversorgungssysteme 68 des Puffersystems 51.

Auch ist es möglich, wie in Fig. 5 schematisch eingetragen, dass nach einer ersten Ausführung eine Verriegelungsvorrichtung vorgesehen ist, die durch in gegenseitigen Eingriff bringbare Verriegelungselemente 72, 73 gebildet ist und mittels welcher das Förderfahrzeug 4 in seiner Aufnahmeposition auf den Führungsschienen 46a, 46b bzw. der Führungsbahn arretiert werden kann. Die Verriegelungsvorrichtung umfasst ein auf der Aufnahmevorrichtung 38 angeordnetes erstes Verriegelungselement 72. Bevorzugt ist das Verriegelungselement 72 an einem Träger 74 befestigt, der endseitig mit den Führungsschienen 46a, 46b verbunden ist. Das Förderfahrzeug 4 ist mit zweiten Verriegelungselement 73 versehen. Das erste Verriegelungselement 72 ist beispielsweise ein Verriegelungsbolzen und das zweite Verriegelungselement 72 ist beispielsweise eine Verriegelungsausnehmung. Zumindest eines der Verriegelungselemente 72, 73 ist über einen Antrieb (nicht dargestellt) derart verstellbar, dass in der Aufnahmeposition des Förderfahrzeuges 4, in welcher sich das Förderfahrzeug 4 auf den Führungsschienen 46a, 46b befindet, das erste Verriegelungselement 72 mit dem zweiten Verriegelungselement 73 formschlüssig eingreift.

Nach einer zweiten Ausführung kann das Förderfahrzeug 4 in seiner Aufnahmeposition auf den Führungsschienen 46a, 46b bzw. der Führungsbahn mittels einer Feststellvorrichtung 26 (Fig. 3) arretiert werden. Die Feststellvorrichtung 26 ist vorzugsweise durch eine elektromagnetische oder elektromechanische Haltebremse gebildet, welche das Förderfahrzeug 4 umfasst. Beispielsweise kann der Antriebsmotor des Fahrantriebes vom Förderfahrzeug 4 die Haltebremse ausbilden. Dadurch kann das Förderfahrzeug 4 in seiner Aufnahmeposition auf den Führungsschienen 46a, 46b bzw. der Führungsbahn gesichert gehalten werden, sodass auch bei sehr dynamischen Verstellbewegungen der Transportvorrichtungen keine Gefahr besteht, dass sich das Förderfahrzeug 4 aus seiner gesicherten Aufnahmeposition wegbewegt.

Nach beiden Ausführungen ist der Antrieb für das Verriegelungselement 72, 73 bzw. der Antrieb für die Haltebremse an die Steuerungsvorrichtung 78 angeschlossen und können durch ein Steuersignal betätigt werden.

Gleichermaßen kann nun auch das Puffersystem 51 eine Verriegelungsvorrichtung aufweisen, die durch in gegenseitigen Eingriff bringbare Verriegelungselemente 73, 75 gebildet ist und mittels welcher das Förderfahrzeug 4 in seiner Aufnahmeposition auf den Führungsschienen 54a, 54b bzw. der Führungsbahn arretiert werden kann. Das Förderfahrzeug 4 ist mit ersten Verriegelungselement 73 versehen. Das zweite Verriegelungselement 75 ist am Tragrahmen 52 angeordnet. Das erste Verriegelungselement 73 ist beispielsweise eine Verriegelungsausnehmung und das zweite Verriegelungselement 72 ist beispielsweise ein Verriegelungsbolzen. Zumindest eines der Verriegelungselemente 73, 75 ist über einen Antrieb (nicht dargestellt) derart verstellbar, dass in der Aufnahmeposition des Förderfahrzeuges 4, in welcher sich das Förderfahrzeug 4 auf den Führungsschienen 54a, 54b befindet, das erste Verriegelungselement 73 mit dem zweiten Verriegelungselement 75 formschlüssig eingreift.

Nach einer anderen Ausführung kann das Förderfahrzeug 4 in seiner Aufnahmeposition auf den Führungsschienen 54a, 54b bzw. der Führungsbahn mittels der Feststellvorrichtung 26 (Fig. 3) arretiert werden.

Nach beiden Ausführungen ist der Antrieb für das Verriegelungselement 72, 73 bzw. der Antrieb für die Haltebremse an das Steuerungssystem angeschlossen und können durch ein Steuersignal betätigt werden. Anderenfalls kann der Antrieb für das Verriegelungselement 75, bzw. der Antrieb für die Haltebremse 73 auch durch die Bedienperson manuell betätigt werden.

Das Puffersystem 51 nach Fig. 4 umfasst ausschließlich in einer Horizontalebene verlaufende Führungsschienen 54a, 54b. Soll die Pufferkapazität erhöht werden, indem im Puffersystem 51 mehr als ein Förderfahrzeug 4 aufgenommen werden kann, umfasst der Tragrahmen 52 in übereinander liegenden Horizontalebenen (Pufferebenen) und mit gegenseitigem Abstand parallel verlaufende Führungsschienen 54a, 54b. In diesem Fall kann es vorgesehen werden, dass das Puffersystem 51 in jeder Pufferebene, insbesondere zumindest eine der Führungsschienen 54a, 54b je Horizontalebene mit einem Energie- und/oder Datenversorgungssystem (Energie- und Datenbus) ausgestattet ist.

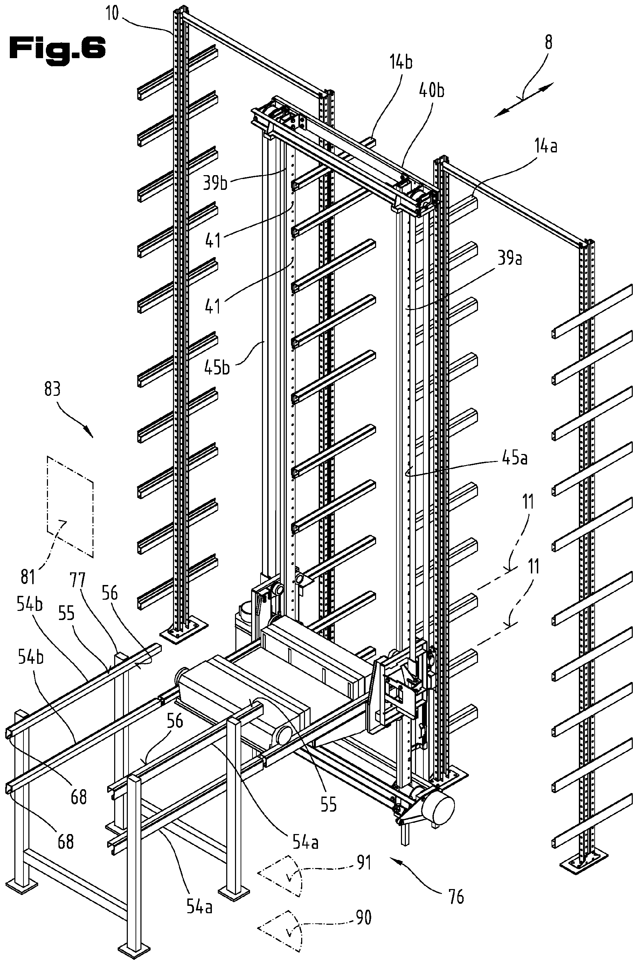

In Fig. 6 ist eine andere Ausführung des Puffersystems 76 für das Regallagersystem 1 gezeigt, welches durch einen ortsfest aufgestellten Tragrahmen 77 gebildet ist. Der Tragrahmen 77 umfasst nach dieser Ausführung in übereinander liegenden Horizontalebenen und mit gegenseitigem Abstand parallel verlaufende Führungsschienen 54a, 54b, welche jeweils eine Höhenführungsbahn 55 und Seitenführungsbahn 56 ausbilden. Die Führungsschienen 54a, 54b sind beispielsweise U-Profile, C-Profile und dgl. und entsprechen bevorzugt jener Ausführung, wie sie in Fig. 3 gezeigt ist. Das Förderfahrzeug 4 kann in der jeweiligen Horizontalebene über die Antriebsräder 20 entlang der Höhenführungsbahnen 51 rollend bewegt werden. Zur Seitenführung des Förderfahrzeuges 4 dienen die oben beschriebenen Seitenführungsorgane 21, welche zwischen den Seitenführungsbahnen 56 der Führungsschienen 54a, 54b positionierbar sind. Die einander gegenüberliegenden Führungsschienen 54a, 54b in der jeweiligen Horizontalebene bilden je eine Führungsbahn.

Soll das Puffersystems 76 auch eine Energieversorgung und/oder Datenübertragung ermöglichen, so wird in jeder Pufferebene, insbesondere zumindest eine der Führungsschienen 54a, 54b je Horizontalebene mit einem Energie- und/oder Datenversorgungssystem 68 (Energie- und Datenbus) versehen ist.

Andererseits kann das Puffersystem 76 auch ausschließlich in einer Horizontalebene verlaufende Führungsschienen 54a, 54b aufweisen.

In Fig. 7 ist ein Abschnitt aus dem Regallagersystem 1 schematisch dargestellt, anhand der die steuerungstechnischen Aspekte erläutert werden. Das Regallagersystem 1 umfasst ein Steuerungssystem mit einer Steuerungsvorrichtung 78, an welche der Hubantrieb 44, das Energie- und/oder Datenversorgungssystem 67 für die Aufnahmevorrichtung 38, eine Sensorik 80 für die Überwachung der Andockposition des Puffersystems 51 gemäß der Ausführung in Fig. 4 und/oder ein Steuerungsmittel 79 angeschlossen sind.

Ist das Kupplungselement 59a, 59b der Kupplungsvorrichtung 58a; 58b mit ein fluidischem und/oder elektrischem Antrieb gekoppelt und/oder das Arretierelement 66a, 66b der Arretiervorrichtung 64a; 64b mit ein fluidischem und/oder elektrischem Antrieb gekoppelt, so ist auch dieser Antrieb und/oder sind auch diese Antriebe an die Steuerungsvorrichtung 78 angeschlossen, wie dies jedoch nicht dargestellt ist.

Die Steuerungsvorrichtung 78 kann ein elektronisches Überwachungsmodul 86 zur Auswertung von Analyseparameter für das Regallager 2 und/oder von Analyseparameter für das Förderfahrzeug 4 umfassen.

Beispielsweise kann das Überwachungsmodul 86 Analyseparameter für das Regallager 2, wie Umschlagleistung von Ladegütern 3 im Regallager 2, eine Lagerkennzahl von jedem Lagerregal 7a, 7b, wie ein Lagerfüllgrad und/oder Lagerbestand an Ladegütern 3, und/oder eine Leistungskennzahl, insbesondere eine Auslastung des/der Förderfahrzeuge(s) 4 in zumindest einer der Regalebenen 11 oder in denjenigen Regalebenen 11, in welchen sich Förderfahrzeuge 4 befinden, auswerten, daher einen Vergleich zwischen Istwert-Analyseparameter und Sollwert-Analyseparameter anstellen. Die Istwerte werden über eine nicht dargestellte Sensorik oder durch den Materialflussrechner erfasst. Der Sollwert-Analyseparameter ist vorzugsweise durch einen Grenzwert definiert. Erreicht der Istwert den Grenzwert, wird von der Steuerungsvorrichtung 78 ein Steuersignal an das Förderfahrzeug 4, insbesondere dessen Fahrantrieb übermittelt und dementsprechend die Fahrbewegung bzw. Fahrroute des/der Förderfahrzeuge(s) 4 in zumindest einer der Regalebenen 11 oder in denjenigen Regalebenen 11, in welchen sich Förderfahrzeuge 4 befinden, gesteuert.

Beispielsweise kann das Überwachungsmodul 86 Analyseparameter für das Förderfahrzeug 4, wie Leistungsparameter für den Fahrantrieb und/oder die Feststellbremse, und/oder Anzahl der Stellbewegungen der Lastaufnahmevorrichtung 23 und/oder Reibungswerte und/oder Temperaturkennlinien und dgl., daher physikalische Messgrößen, auswerten, daher einen Vergleich zwischen Istwert- Analyseparameter und Sollwert-Analyseparameter anstellen. Die Istwerte werden über eine am Förderfahrzeug 4 angeordnete Sensorik 89, wie in Fig. 3 schematisch eingetragen, erfasst. Aus dem Soll-Istwert-Vergleich kann die Steuerungsvorrichtung 78 einen Betriebszustand und/oder ein Betriebsverhalten für das Förderfahrzeug 4 ableiten und Wartungsintervalle berechnen. Der Sollwert-Analyseparameter ist vorzugsweise durch einen Grenzwert definiert. Erreicht der Istwert den Grenzwert, wird von der Steuerungsvorrichtung 78 ein Steuersignal an das Förderfahrzeug 4, insbesondere dessen Fahrantrieb übermittelt und dementsprechend die Fahrbewegung bzw. Fahrroute des/der Förderfahrzeuge(s) 4 in zumindest einer der Regalebenen 11 oder in denjenigen Regalebenen 11, in welchen sich Förderfahrzeuge 4 befinden, gesteuert.

Ferner kann an die Steuerungsvorrichtung 78 eine Anzeigevorrichtung 87, insbesondere ein Bildschirm oder eine Leuchte, angeschlossen sein, welcher der Ausgabe der Änderung von einem ersten Betriebsmodus in einen zweiten Betriebsmodus dient. Erreicht der Istwert-Analyseparameter den Sollwert-Analyseparameter, wird von der Steuerungsvorrichtung 78 der zweite Betriebsmodus durch Absetzen von Steuersignalen an den Fahrantrieb des Förderfahrzeuges 4 und an den Hubantrieb 44 gestartet. Beispielsweise wird an der Anzeigevorrichtung 87 signalisiert, dass eine Wartung am Förderfahrzeug 4 erforderlich ist.

Wie in Fig. 7 eingetragen, ist das Regallagersystem 1 mit einem Schutzzaun 81 umgeben. Auch die Vorzone des Regallagersystems 1, in welcher die Förderfahrzeug-Hebevorrichtung 6 bzw. die Aufnahmevorrichtung 38 angeordnet ist, ist vom Schutzzaun 81 umgeben. Der Vorzonenbereich 83 ist über eine Zugangstür 82 durch eine Bedienperson 84 von außen zugänglich. Will die Bedienperson 84 mit dem Puffersystem 51 in den Vorzonenbereich 83, muss er vorerst über ein Aktivierungsmittel 85, beispielsweise einen Schlüssel, Transpondersystem und dgl., mit dem Steuerungsmittel 79 interaktiv werden. Auch ist außerhalb des umgrenzten Vorzonenbereich 83 ein Stellplatz 85 vorgesehen, auf welchem ein oder mehrere Puffersysteme 51 abgestellt werden können.

Wie in Fig. 7 in strichlierte Linien eingetragen, kann das Steuerungsmittel 79 auch durch eine Eingabevorrichtung 88 gebildet sein, welche am Tragrahmen 52 des mobilen Puffersystems 51 befestigt ist. Andererseits kann nach einer anderen, nicht gezeigten Ausführung die Eingabevorrichtung 88 auch eine tragbare Bedienkonsole sein, welche von der Bedienperson 84 mitgeführt wird. Die Bedienkonsole kann über eine (drahtlose) optische Signal- bzw. Datenübertragung, insbesondere Infrarot-Datenübertragung oder Laser-Datenübertragung, oder Funkverbindung mit der Steuerungsvorrichtung 78 verbunden sein.

Auch kann das Steuerungsmittel 79 durch eine Steuerlogik gebildet werden, insbesondere ein Computerprogramm, welches auf einem die Steuerungsvorrichtung 78 umfassenden Rechner läuft bzw. gespeichert ist.

Durch die Anordnung der Förderfahrzeug-Hebevorrichtung 6 und das Vorsehen eines mobilen Puffersystems 51 (Fig. 4) und/oder stationären Puffersystem 76 (Fig. 6) sowie die spezielle Ausbildung der Steuerungsvorrichtung 78 sind unterschiedliche Betriebsweisen (Betriebsmoden) des Regallagersystems 1 möglich.

Gemäß einer ersten Betriebsweise kann ein Ladegut 3 innerhalb des Regallagers 2, beispielsweise zum Zwecke der Lagerverdichtung von einem Stellplatz 12 in der ersten Regalebene 11 auf einen Stellplatz 12 in der vierten Regalebene 11 umgelagert werden. Dabei wird das Förderfahrzeug 4 vorerst auf die Aufnahmevorrichtung 38 übernommen und in seiner Aufnahmeposition auf den Führungsschienen 46a, 46b bzw. der Führungsbahn arretiert. Die Arretierung kann, wie oben beschrieben, entweder über die in gegenseitigen Eingriff bringbaren Verriegelungselemente 72, 73 oder durch Betätigen der Feststellbremse am Förderfahrzeug 4 erfolgen. Befindet sich das Förderfahrzeug 4 nun auf der Aufnahmevorrichtung 38, wird letztere gemeinsam mit dem Förderfahrzeug 4 auf das von der Steuerungsvorrichtung 78 definierte Höhenniveau der ersten Regalebene 11 verstellt. In der Regalebene 11 angekommen, wird von der Steuerungsvorrichtung 78 an einen Antrieb für zumindest eines der Verriegelungselemente 72, 73 (Verriegelungsvorrichtung) bzw. einen Antrieb für die Feststellbremse (Feststellvorrichtung) ein Schaltsignal gesendet und das Förderfahrzeug 4 nicht weiter in seiner Aufnahmeposition blockiert/verriegelt. Danach fährt das Förderfahrzeug 4 aus der Aufnahmeposition entlang der Führungsschienen 46a, 46b bzw. der Führungsbahn von der Aufnahmevorrichtung 38 in das Regallager 2 bis vor den Stellplatz 12 in der ersten Regalebene 11.

Dort angekommen, wird durch die Lastaufnahmevorrichtung 23 das Ladegut 3 aus dem Lagerregal 7a, 7b ausgelagert und auf das Förderfahrzeug 4 übernommen. Danach fährt das Förderfahrzeug 4 mit dem Ladegut 3 entlang der Führungsschienen 14a, 14b vom Regallager 2 auf die Aufnahmevorrichtung 38. Wurde das Förderfahrzeug 4 mit dem Ladegut 3 auf der Aufnahmevorrichtung 38 übernommen, wird das Förderfahrzeug 4 auf das von der Steuerungsvorrichtung 78 definierte Höhenniveau der vierten Regalebene 11 verstellt. Danach fährt das Förderfahrzeug 4 entlang der Führungsschienen 46a, 46b aus der Aufnahmeposition von der Aufnahmevorrichtung 38 in das Regallager 2 bis vor den Stellplatz 12 in der vierten Regalebene 11. Dort angekommen, wird durch die Lastaufnahmevorrichtung 23 das Ladegut 3 vom Förderfahrzeug 4 in das Lagerregal 7a, 7b eingelagert.

Andererseits kann nach einer ersten Betriebsweise ein Förderfahrzeug 4 innerhalb des Regallagers 2 zwischen Regalebenen 11 umgesetzt werden, wenn in einer der Regalebenen 11 ein Einlagervorgang oder Auslagervorgang durchzuführen ist und sich in dieser Regalebene 11 kein Förderfahrzeug 4, welches mit der Lastaufnahmevorrichtung 23 ausgestattet ist, befindet. Dabei wird das Förderfahrzeug 4 aus der einen Regalebenen 11 zur Förderfahrzeug-Hebevorrichtung 6 verfahren und dort auf die Aufnahmevorrichtung 38 übernommen und in seiner Aufnahmeposition auf den Führungsschienen 46a, 46b bzw. der Führungsbahn arretiert. Befindet sich das Förderfahrzeug 4 nun auf der Aufnahmevorrichtung 38, wird letztere gemeinsam mit dem Förderfahrzeug 4 auf das von der Steuerungsvorrichtung 78 definierte Höhenniveau der Regalebene 11 verstellt, in welcher das Förderfahrzeug 4 benötigt wird. Danach wird von der Steuerungsvorrichtung 78 an einen Antrieb für zumindest eines der Verriegelungselemente 72, 73 (Verriegelungsvorrichtung) bzw. einen Antrieb für die Feststellbremse (Feststellvorrichtung) ein Schaltsignal gesendet und diese betätigt, sodass das Förderfahrzeug 4 nicht weiter in seiner Aufnahmeposition blockiert/verriegelt wird und entlang der Führungsschienen 46a, 46b von der Aufnahmevorrichtung 38 in das Regallager 2 verfahren kann.

Es sei an dieser Stelle auch darauf hingewiesen, dass aus Gründen der besseren Übersicht im Regallagersystem 1 nur ein Förderfahrzeug 4 dargestellt ist. Üblicherweise werden aber im Regallagersystem 1 mehrere Förderfahrzeuge 4 (Shuttle), beispielsweise für je drei Regalebenen 11 zumindest ein Förderfahrzeug 4 eingesetzt.

Nach einer zweiten Betriebsweise, die zusätzlich zur ersten Betriebsweise durch die Steuerungsvorrichtung 78 möglich ist, wird die Aufnahmevorrichtung 38 auf ein Höhenniveau einer Übergabeebene 90, 91 (Fig. 4, 6) bewegt und in dieser das Förderfahrzeug 4 zwischen dem Puffersystem 51; 76 (Fig. 4, 6) und der Aufnahmevorrichtung 38 umgesetzt.

Die zweite Betriebsweise soll nach einer ersten Ausführung anhand der Fig. 7 beschrieben werden. Die Steuerungsvorrichtung 78 kann über das elektronische Überwachungsmodul 86 Analyseparameter für das Regallager 2 und/oder Analyseparameter für das Förderfahrzeug 4 auswerten.

Erreicht der Istwert-Analyseparameter den Sollwert (Grenzwert)-Analyseparameter, erhält der Fahrantrieb des Förderfahrzeuges 4 ein Steuersignal (Steuerbefehl), mit welchem veranlasst wird, dass das Förderfahrzeug 4 vom Regallager 2 zur Förderfahrzeug-Hebevorrichtung 6 fährt. Ebenso erhält der Hubantrieb 44 für die Aufnahmevorrichtung 38 ein Steuersignal (Steuerbefehl), mit welchem veranlasst wird, dass die Aufnahmevorrichtung 38 auf das Höhenniveau derjenigen Regalebene 11 verstellt wird, in welcher das Förderfahrzeug 4 vom Regallager 2 auf die Aufnahmevorrichtung 38 übernommen werden soll. Befindet sich das Förderfahrzeug 4 auf der Aufnahmevorrichtung 38 und wurde es in seiner Aufnahmeposition auf den Führungsschienen 46a, 46b bzw. der Führungsbahn mittels der Verriegelungselemente 72, 73 oder Feststellbremse 26 arretiert, wie oben beschrieben, wird nun die Aufnahmevorrichtung 38 gemeinsam mit dem Förderfahrzeug 4 auf das von der Steuerungsvorrichtung 78 definierte Höhenniveau der Übergabeebene 90, 91 verstellt. In der Übergabeebene 90, 91 der Aufnahmevorrichtung 38 und Andockposition des mobilen Puffersystems 51 stehen die Führungsschienen 46a, 46b und Führungsschienen 54a, 54b fluchten einander gegenüber.

Gemäß der Ausführung mit dem mobilen Puffersystem 51, verharrt nun das Förderfahrzeug 4 solange in arretierter Aufnahmeposition auf der Aufnahmevorrichtung 38, bis die Bedienperson 84 das Puffersystem 51 in die Andockposition bewegt und gegebenenfalls über die Kupplungs- und Arretiervorrichtungen 58, 64 positioniert hat. In der Andockposition erhält die Steuerungsvorrichtung 78 von der Sensorik 80 ein Überwachungssignal, mit welchem bestätigt wird, dass sich das mobile Puffersystem 51 ordnungsgemäß in der Andockposition befindet.

Daraufhin wird von der Steuerungsvorrichtung 78 an einen Antrieb für zumindest eines der Verriegelungselemente 72, 73 (Verriegelungsvorrichtung) bzw. einen Antrieb für die Feststellbremse (Feststellvorrichtung) ein Schaltsignal gesendet und das Förderfahrzeug 4 nicht weiter in seiner Aufnahmeposition blockiert/verriegelt.

Danach kann das Förderfahrzeug 4 entlang der Führungsschienen 46a, 46b, 54a, 54b bzw. den Führungsbahnen von der Aufnahmevorrichtung 38 auf das Puffersystem 51 in eine Pufferposition, wie in Fig. 5 in strichlierte Linien eingetragen, bewegt werden. Das Förderfahrzeug 4 kann in der Pufferposition auf den Führungsschienen 54a, 54b bzw. der Führungsbahn wiederum arretiert werden. Die Arretierung kann, wie oben beschrieben, entweder über die in gegenseitigen Eingriff bringbaren Verriegelungselemente 73, 75 oder durch Betätigen der Feststellbremse am Förderfahrzeug 4 erfolgen.

Nach einer ersten Verfahrensmaßnahme im zweiten Betriebsmodus wird ein leeres, mobiles Puffersystems 51 bereitgestellt, wenn der Istwert-Analyseparameter den Sollwert (Grenzwert)-Analyseparameter für ein Förderfahrzeug 4 erreicht.

Die Bereitstellung des leeren, mobilen Puffersystems 51 erfolgt derart, dass ein am Abstellplatz 85, wie in Fig. 7 in strichlierten Linien eingetragen, abgestelltes leeres Puffersystem 51 in den Vorzonenbereich 83 bewegt wird.

Dies kann entweder manuell durch die Bedienperson 84 oder automatisch durch einen, von der Steuervorrichtung 78 gesteuerten Fahrantrieb am (selbstfahrenden) Puffersystem 51 erfolgen.

Wird das Puffersystem 51 durch die Bedienperson 84 in den Vorzonenbereich 83 geschoben, erhält die Bedienperson 84 eine entsprechende Meldung an der Anzeigevorrichtung 87. Während die Bedienperson 84 das Puffersystem 51 vom Abstellplatz 85 abholt, wird die Aufnahmevorrichtung 38 noch im Automatikbetrieb auf das Höhenniveau der Übergabeebene 90; 91 bewegt. Erst wenn sich die Aufnahmevorrichtung 38 in der Übergabeebene 90; 91 in einer Ruheposition befindet, sind die sicherheitstechnischen Aspekte erfüllt und kann die Bedienperson 84, nachdem das Steuerungsmittel 79 über das Aktivierungsmittel 85 betätigt und der Steuerungsvorrichtung 78 ein Stoppsignal gemeldet wurde, das Puffersystem 51 durch die Zugangstür 82 in den Vorzonenbereich 83 bis in die Andockposition schieben, in welcher das Förderfahrzeug 4 von der Aufnahmevorrichtung 38 abgeholt werden kann.

Befindet sich nun das Förderfahrzeug 4 auf dem Puffersystem 51 in einer (arretierten) Pufferposition, wird das beladene Puffersystem 51 aus dem Vorzonenbereich 83 zu einem Abstellplatz 85 bewegt. Dies kann entweder manuell durch die Bedienperson 84 oder automatisch durch einen, von der Steuervorrichtung 78 gesteuerten Fahrantrieb am (selbstfahrenden) Puffersystem 51 erfolgen.

Wird das Puffersystem 51 durch die Bedienperson 84 zum Abstellplatz 85 geschoben, kann, nachdem die Zugangstür 82 geschlossen und das Steuerungsmittel 79 über das Aktivierungsmittel 85 wieder deaktiviert sowie der Steuerungsvorrichtung 78 ein Freischaltsignal gemeldet wurde, die Aufnahmevorrichtung 38 von der Steuervorrichtung 78 wieder in den Automatikbetrieb geschalten werden. Daher kann die Steuervorrichtung 78 den Hubantrieb 44 wieder nach dem ersten Betriebsmodus steuern.

Andererseits kann nach einer zweiten Verfahrensmaßnahme im zweiten Betriebsmodus zusätzlich zu dem/den bereits im Regallagersystem 1 befindlichen Förderfahrzeug(en) 4 ein oder mehrere Förderfahrzeuge 4 eingebracht werden.

Die Bereitstellung des zumindest einen Förderfahrzeuges 4 über das mobile Puffersystem 51 kann manuell oder automatisch auf oben beschriebene Weise erfolgen.

Dies kann der Fall sein, wenn der Istwert-Analyseparameter den Sollwert (Grenzwert)-Analyseparameter für das Regallager 3 erreicht, und beispielsweise eine besonders hohe Umschlagleistung von Ladegütern 3 in einer der Regalebenen 11 vorliegt, und in dieser Regalebene 11 ein zusätzliches Förderfahrzeug 4 benötigt wird, oder in irgendeiner der Regalebenen 11 vorliegt, und zumindest ein zusätzliches Förderfahrzeug 4 in irgendeiner der Regalebenen 11 benötigt wird.

Nach der Ausführung in Fig. 6 ist das Puffersystem 76 stationär im unmittelbaren Nahbereich der Förderfahrzeug-Hebevorrichtung 6 aufgestellt, wobei mehrere Pufferpositionen auf unterschiedlichen Höhenniveaus vorgesehen sind, sodass im zweiten Betriebsmodus die Aufnahmevorrichtung 38 entweder auf das Höhenniveau einer ersten Übergabeebene 90 oder zweiten Übergabeebene 91 bewegt und in der entsprechenden Übergabeebene 90, 91 das Förderfahrzeug 4 zwischen dem Puffersystem 76 und der Aufnahmevorrichtung 38 umgesetzt wird. Erreicht der Istwert-Analyseparameter den Sollwert (Grenzwert)-Analyseparameter für das Förderfahrzeug 4, beispielweise wurde eine entsprechende Anzahl an Stellbewegungen der Lastaufnahmevorrichtung 23 durchgeführt, wird das Förderfahrzeug 4 in eine der Pufferpositionen auf das Puffersystem 76 bewegt. Dort angekommen können direkt in der Pufferposition am Förderfahrzeug 4 Wartungsarbeiten erledigt werden. Hierzu ist es bloß erforderlich, dass ein in Fig. 6 in strichpunktierte Linien schematisch eingetragener Schutzzaun 81 in der Vorzone zwischen dem Puffersystem 76 und der Förderfahrzeug-Hebevorrichtung 6 angeordnet wird. Das Puffersystem 76 ist demnach über den Schutzzaun 81 von der Förderfahrzeug-Hebevorrichtung 6 getrennt. Im Schutzzaun 81 ist eine tunnelartige Ausnehmung ausgebildet, durch welche das Förderfahrzeug 4 hindurchbewegt werden kann. Gegebenenfalls kann während der Wartungsarbeiten die Ausnehmung durch eine Schutztür (nicht gezeigt) verschlossen werden. Nach dieser Ausführung kann das Regallagersystem 1, insbesondere die Förderfahrzeug-Hebevorrichtung 6 ununterbrochen im Automatikbetrieb betrieben werden.

Sind im Vorzonenbereich 83 auch die Fördervorrichtungen 50a, 50b (Fig. 2) vorgesehen, sind zusätzlich die folgenden ersten Betriebsweisen durch die Steuerungsvorrichtung 78 möglich.

Soll ein Ladegut 3 gemäß einem Kommissionierauftrag aus dem Regallager 2 ausgelagert werden, kann ein Förderfahrzeug 4 vorerst durch die Aufnahmevorrichtung 38 auf das von der Steuerungsvorrichtung 78 definierte Höhenniveau einer Regalebene 11 verbracht werden. Danach fährt das Förderfahrzeug 4 entlang der Führungsschienen 46a, 46b von der Aufnahmevorrichtung 38 in das Regallager 2 bis vor einen Stellplatz 12 in einer der Regalebenen 11. Dort angekommen, wird durch die Lastaufnahmevorrichtung 23 das Ladegut 3 aus dem Lagerregal 7a, 7b ausgelagert und auf das Förderfahrzeug 4 übernommen. Danach fährt das Förderfahrzeug 4 mit dem Ladegut 3 entlang der Führungsschienen 14a, 14b vom Regallager 2 auf die Aufnahmevorrichtung 38 und auf dieser in der Aufnahmeposition arretiert. Wurde das Förderfahrzeug 4 mit dem Ladegut 3 auf der Aufnahmevorrichtung 38 übernommen, wird das Förderfahrzeug 4 auf die von der Steuerungsvorrichtung 78 definierte Fördertechnikebene 49 in die Übergabe- bzw. Übernahmestellung zwischen die Fördervorrichtungen 50a, 50b bewegt und das Ladegut 3 auf die Fördervorrichtung 50b übergeben. Zur Übergabe des Ladegutes 3 kann wiederum die Lastaufnahmevorrichtung 23 oder eine (nicht dargestellte) vom Förderfahrzeug 4 getrennte Entladevorrichtung, beispielsweise ein Schieber oder Riemenumsetzer, verwendet werden.

Andererseits kann aber auch ein auf der Fördervorrichtung 50a bereitgestelltes Ladegut 3 in das Regallager 2 eingelagert werden. Dabei wird das Förderfahrzeug 4 vorerst durch die Aufnahmevorrichtung 38 in seiner (arretierten) Aufnahmeposition auf die von der Steuerungsvorrichtung 78 definierte Fördertechnikebene 49 in die Übergabe- bzw. Übernahmestellung zwischen die Fördervorrichtungen 50a, 50b bewegt. Danach wird das Ladegut 3 von der Fördervorrichtung 50b auf das Förderfahrzeug 4 übernommen. Zur Übernahme des Ladegutes 3 kann wiederum die Lastaufnahmevorrichtung 23 oder eine (nicht dargestellte) vom Förderfahrzeug 4 getrennte Beladevorrichtung, beispielsweise ein Schieber oder Riemenumsetzer, verwendet werden. Wurde das Ladegut 3 auf das Förderfahrzeug 4 übernommen, wird das Förderfahrzeug 4 durch die Aufnahmevorrichtung 38 auf das von der Steuerungsvorrichtung 78 definierte Höhenniveau einer Regalebene 11 verstellt. Danach fährt das Förderfahrzeug 4 entlang der Führungsschienen 46a, 46b von der Aufnahmevorrichtung 38 in das Regallager 2 bis vor einen freien Stellplatz 12 in einer der Regalebenen 11. Dort angekommen, wird durch die Lastaufnahmevorrichtung 23 das Ladegut 3 in das Lagerregal 7a, 7b auf einen vorderen oder hinteren Stellplatz 12 eingelagert.

Abschließend sei noch drauf hingewiesen, dass das Puffersystem 51; 76 auch in Tiefenrichtung hintereinander mehrere Pufferpositionen aufweisen kann und beispielsweise zwei Förderfahrzeuge 4 hintereinander aufnehmen kann. Hierzu weisen die Führungsschienen 54a, 54b eine zumindest der doppelten Länge eines Förderfahrzeuges 4 entsprechende Länge auf.

Auch ist es gemäß der Ausführung nach Fig. 6 möglich, dass ein Förderfahrzeug 4, welches auf das Puffersystem 76 abgestellt wurde, über das mobile Puffersystem 51 abgeholt wird. Hierzu ist das Puffersystem 76 auf einer der Förderfahrzeug-Hebevorrichtung 6 abgewandten Seite mit dem/den oben beschriebenen Kupplungselement(en) 59 und das Puffersystem 51 auf einer der Förderfahrzeug-Hebevorrichtung 6 zugewandten Seite mit dem/den oben beschriebenen Kupplungselement(en) 60 versehen. Ebenso kann das/die Kupplungselement(e) 59 mit dem/den Arretierelement(en) 65 und das/die Kupplungselement(e) 60 mit dem/den Arretierelement(en) 66 versehen werden.

Grundsätzlich ist es auch von Vorteil, wenn einem Förderfahrzeug 4, welches vom Puffersystem 51; 76 neu in das Regallager 2 übergeben wird, von der Steuerungsvorrichtung 78 erfasst und eine unverwechselbare, eindeutige Identifikation, insbesondere eine Systemnummer zugewiesen wird. Hierzu kann man sich der Transpondertechnologie (Radio Frequency Identification RFID) bedienen. Vorzugsweise erfolgt die Identifikation des neuen Förderfahrzeuges 4 unmittelbar vor der Übergabe auf die Aufnahmevorrichtung 38 oder auf der Aufnahmevorrichtung 38, insbesondere während deren Stellbewegung.

Ebenso können von der Steuerungsvorrichtung 78 für das/die Förderfahrzeug(e) 4 Wartungsintervalle definiert werden, unabhängig von der Erfassung von Istwert-Analyseparameter und wird automatisch nach einem Zeitintervall der zweite Betriebsmodus durch die Steuerungsvorrichtung 78 gestartet und das/die Förderfahrzeug(e) 4 von der Aufnahmevorrichtung 38 auf ein Puffersystem 51; 76 gefördert. Die Wartungsintervalle werden beispielweise basierend auf Betriebsdaten für das/die Förderfahrzeug(e) 4 ermittelt.

Wie beschrieben, kann die Übergabebewegung des Förderfahrzeuges 4 zwischen dem Puffersystem 51; 76 und der Aufnahmevorrichtung 38 entweder manuell durch die Bedienperson 84 oder durch eine Beladungs- und/oder Entladungsvorrichtung, beispielsweise ein Schieber, automatisch erfolgen. Die Beladungs- und/oder Entladungsvorrichtung umfasst hierzu einen elektrischen und/oder fluidischen Stellantrieb, welcher an die Steuerungsvorrichtung 78 angeschlossen ist, welche ihrerseits die Übergabebewegung des Förderfahrzeuges 4 steuert. Die Beladungs- und/oder Entladungsvorrichtung ist getrennt von der Aufnahmevorrichtung 38 und/oder dem Puffersystem 51; 76 und im Übergabebereich zwischen der Aufnahmevorrichtung 38 und/oder dem Puffersystem 51; 76 stationär angeordnet.

Die Ausführungsbeispiele zeigen mögliche Ausführungsvarianten des Regallagersystems 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Regallagersystems 1 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Regallagersystem | 41 | Befestigungsmittel |
| 2 | Regallager | 42 | Aufnahmegestell |
| 3 | Ladegut | 43 | Führungsorgan |
| 4 | Förderfahrzeug | 44 | Hubantrieb |
| 5 | Ladegut-Hebevorrichtung | 45 | Zugmittel |
| | | | |
| 6 | Förderfahrzeug-Hebevorrichtung | 46 | Führungsschiene |
| 7 | Lagerregal | 47 | Höhenführungsbahn |
| 8 | Regalgasse | 48 | Seitenführungsbahn |
| 9 | Regallagerseite | 49 | Fördertechnikebene |
| 10 | Regallagerseite | 50 | Fördervorrichtung |
| | | | |
| 11 | Regalebene | 51 | Puffersystem |
| 12 | Stellplatz | 52 | Tragrahmen |
| 13 | Pufferplatz | 53 | Fahrgestell |
| 14 | Führungsschiene | 54 | Führungsschiene |
| 15 | Höhenführungsbahn | 55 | Höhenführungsbahn |
| | | | |
| 16 | Seitenführungsbahn | 56 | Seitenführungsbahn |
| 17 | Führungsschiene | 57 | Stützrad |
| 18 | Höhenführungsbahn | 58 | Kupplungsvorrichtung |
| 19 | Seitenführungsbahn | 59 | Kupplungselement |
| 20 | Antriebsrad | 60 | Kupplungselement |
| | | | |
| 21 | Seitenführungsorgan | 61 | Positionierelement |
| 22 | Gehäuserahmen | 62 | Aufnahme |
| 23 | Lastaufnahmevorrichtung | 63 | Tragkörper |
| 24 | Teleskoparm | 64 | Arretiervorrichtung |
| 25 | Mitnehmer | 65 | Arretierelement |
| | | | |
| 26 | Feststellvorrichtung | 66 | Arretierelement |
| 27 | Aufnahmevorrichtung | 67 | Energie- und/oder Datenversorgungssystem |
| 28 | Transportvorrichtung | | |
| 29 | Hubantrieb | 68 | Energie- und/oder Datenversorgungssystem |
| 30 | Hubrahmen | | |
| | | 69 | Kupplungsvorrichtung |
| 31 | Mast | 70 | Kupplungselement |
| 32 | Führung | | |
| 33 | Führungsrad | 71 | Kupplungselement |
| 34 | Fördertechnikebene | 72 | Verriegelungselement |
| 35 | Fördervorrichtung | 73 | Verriegelungselement |
| | | 74 | Träger |
| 36 | Führungsrahmen | 75 | Verriegelungselement |
| 37 | Hubrahmen | | |
| 38 | Aufnahmevorrichtung | 76 | Puffersystem |
| 39 | Rahmenteil | 77 | Tragrahmen |
| 40 | Traverse | 78 | Steuerungsvorrichtung |
| | | 79 | Steuerungsmittel |
| 80 | Sensorik | | |
| | | | |
| 81 | Schutzzaun | | |
| 82 | Zugangstür | | |
| 83 | Vorzonenbereich | | |
| 84 | Bedienperson | | |
| 85 | Stellplatz | | |
| | | | |
| 86 | Überwachungsmodul | | |
| 87 | Anzeigevorrichtung | | |
| 88 | Eingabevorrichtung | | |
| 89 | Sensorik | | |
| 90 | Übergabeebene | | |

## Patentansprüche

1. Regallagersystem (1) mit einem
Regallager (2) mit benachbart zueinander angeordneten Lagerregalen (7a, 7b), zwischen denen sich zumindest eine Regalgasse (8) von einer ersten Regallagerseite (9) zu einer zweiten Regallagerseite (10) erstreckt und welche in übereinander liegenden Regalebenen (11) Stellplätze (12) für Ladegüter (3) aufweisen, und
in den Regalebenen (11) entlang der Regalgasse (8) verlaufenden Führungsbahnen (14a, 14b), und
zumindest einem entlang der Führungsbahnen (14a, 14b) verfahrbaren, autonomen Förderfahrzeug (4) zum Transport der Ladegüter (3) zu den Stellplätzen (12), und
einer auf der zweiten Regallagerseite (10) stirnseitig vor der Regalgasse (8) angeordneten Förderfahrzeug-Hebevorrichtung (6) sowie
einer Steuerungsvorrichtung (78),
welche Förderfahrzeug-Hebevorrichtung (6) eine durch einen an die Steuerungsvorrichtung (78) angeschlossenen Hubantrieb (44) heb- und senkbare Aufnahmevorrichtung (38) zum Transport des Förderfahrzeuges (4) umfasst, sodass in einem ersten Betriebsmodus der Steuerungsvorrichtung (78) das Förderfahrzeug (14) über die Aufnahmevorrichtung (38) zwischen den Regalebenen (11) umgesetzt wird, wobei die Förderfahrzeug-Hebevorrichtung (6) beidseitig seitlich zur Regalgasse (8) angeordnete vertikale Rahmenteile (39a, 39b) umfasst und die Aufnahmevorrichtung (38) mit Führungsorganen (43a, 43b) an den Rahmenteilen (39a, 39b) gelagert ist und eine parallel in Richtung zur Regalgasse (8) verlaufende Führungsbahn (46a, 46b) ausbildet,
**dadurch gekennzeichnet, dass** das Regallagersystem (1) zusätzlich eine Ladegut-Hebevorrichtung (5), welche auf der ersten Regallagerseite (9) stirnseitig vor dem Regallager (2) angeordnet ist, und ein Puffersystem (51; 76) zur Aufnahme zumindest eines Förderfahrzeuges (4) aufweist, welches mit einem ortsfest aufgestellten oder auf einem Fahrgestell (53) aufgebauten Tragrahmen (52; 77) mit einer Führungsbahn (54a, 54b) ausgestattet und derart relativ zur Förderfahrzeug-Hebevorrichtung (6) angeordnet bzw. positionierbar ist, dass es sich in der Verlängerung der Regalgasse (8) befindet, und wobei in einem zweiten Betriebsmodus der Steuerungsvorrichtung (78) die relativ gegenüber dem Tragrahmen (52; 77) durch den Hubantrieb (44) heb- und senkbare Aufnahmevorrichtung (38) auf das Höhenniveau einer Übergabeebene (90; 91) verstellt wird, sodass das Förderfahrzeug (4) zwischen der heb- und senkbaren Aufnahmevorrichtung (38) und dem Puffersystem (51; 76) umgesetzt wird.

2. Regallagersystem nach Anspruch 1, **dadurch gekennzeichnet, dass** der Tragrahmen (52; 77) des Puffersystems (51; 76) in übereinander liegenden Horizontalebenen verlaufende Führungsbahnen (54a, 54b) umfasst.

3. Regallagersystem nach Anspruch 1 oder 2, **dadurch gekennzeichnet, dass** der Tragrahmen (52) und die Förderfahrzeug-Hebevorrichtung (6) miteinander in Eingriff bringbare Kupplungselemente (59, 60) umfasst, mittels welchen das Puffersystem (51; 76) relativ gegenüber der Aufnahmevorrichtung (38) positionierbar und in einer Andockposition arretierbar ist.

4. Regallagersystem nach einem der Ansprüche 1 bis 3, **dadurch gekennzeichnet, dass** das Puffersystem (51; 76) ein Verriegelungselement (75) umfasst, mittels welchem das Förderfahrzeug (4) in seiner Pufferposition auf der Führungsbahn (54a, 54b) arretierbar ist.

5. Regallagersystem nach einem der Ansprüche 1 bis 4, **dadurch gekennzeichnet, dass** das Puffersystem (51; 76) zumindest ein Energie- und/oder Datenversorgungssystem (68) umfasst.

6. Regallagersystem nach einem der Ansprüche 1 bis 5, **dadurch gekennzeichnet, dass** an die Steuerungsvorrichtung (78) ein Steuerungsmittel (79) angeschlossen ist, durch welches an die Steuerungsvorrichtung (78) ein elektrisches Steuersignal bzw. Schaltbefehl absetzbar und zumindest der Hubantrieb (44) der Aufnahmevorrichtung (38) steuerbar ist.

7. Verfahren zum automatisierten Betreiben eines Regallagersystems (1) gemäß Anspruch 1,
wobei von der Steuerungsvorrichtung (78) in dem ersten Betriebsmodus das Förderfahrzeug (4) über die Aufnahmevorrichtung (38) innerhalb des Regallagers (2) zwischen den Regalebenen (11) umgesetzt wird, indem die Aufnahmevorrichtung (38) auf das Höhenniveau einer Regalebene (11) positioniert und das Förderfahrzeug (4) zwischen der Aufnahmevorrichtung (38) und der Regalebene (11) verfahren wird, und
wobei von der Steuerungsvorrichtung (78) in dem zweiten Betriebsmodus die Aufnahmevorrichtung (38) auf ein Höhenniveau einer Übergabeebene (90; 91) bewegt und in dieser das Förderfahrzeug (4) zwischen dem Puffersystem (51; 76) und der Aufnahmevorrichtung (38) in einer Richtung parallel zur Regalgasse (8) verfahren wird.

8. Verfahren nach Anspruch 7, **dadurch gekennzeichnet, dass** das Förderfahrzeug (4) automatisiert zwischen dem Puffersystem (51; 76) und der Aufnahmevorrichtung (38) bewegt wird, wobei die Übergabebewegung für das Förderfahrzeug (4) zwischen dem Puffersystem (51; 76) und der Aufnahmevorrichtung (38) durch die Steuerungsvorrichtung (78) gesteuert wird.

9. Verfahren nach Anspruch 7 oder 8, **dadurch gekennzeichnet, dass** die Steuerungsvorrichtung (78) zumindest einen Analyseparameter für das Regallager (2) überwacht.

10. Verfahren nach einem der Ansprüche 7 bis 9, **dadurch gekennzeichnet, dass** die Steuerungsvorrichtung (78) zumindest einen Analyseparameter für das Förderfahrzeug (4) überwacht.

11. Verfahren nach einem der Ansprüche 7 bis 10, **dadurch gekennzeichnet, dass** die Steuerungsvorrichtung (78) im zweiten Betriebsmodus den Hubantrieb (44) für die heb- und senkbare Aufnahmevorrichtung (38) und/oder das Förderfahrzeug (4) steuert, sofern ein Istwert-Analyseparameter einen Grenzwert-Analyseparameter erreicht, und das Förderfahrzeug (4) auf das Puffersystem (51; 76) bewegt wird.

12. Verfahren nach einem der Ansprüche 7 bis 10, **dadurch gekennzeichnet, dass** die Steuerungsvorrichtung (78) im zweiten Betriebsmodus den Hubantrieb (44) für die heb- und senkbare Aufnahmevorrichtung (38) und/oder das Förderfahrzeug (4) steuert, sofern ein Istwert-Analyseparameter einen Grenzwert-Analyseparameter erreicht, und das Förderfahrzeug (4) vom Puffersystem (51; 76) in das Regallager (2) bewegt wird.

13. Verfahren nach einem der Ansprüche 7 bis 12, **dadurch gekennzeichnet, dass** die Übergabe eines Förderfahrzeuges (4) zwischen der Aufnahmevorrichtung (38) und dem Puffersystem (51; 76) durch eine Sensorik (80) überwacht wird.

14. Verfahren nach einem der Ansprüche 7 bis 13, **dadurch gekennzeichnet, dass** ein Förderfahrzeug (4), welches vom Puffersystem (51; 76) in das Regallager (2) übergeben wird, von der Steuerungsvorrichtung (78) erfasst und ihm eine unverwechselbare Identifikation zugewiesen wird.

15. Verfahren nach einem der Ansprüche 7 bis 14, **dadurch gekennzeichnet, dass** die Steuerungsvorrichtung (78) Wartungsintervalle für das Förderfahrzeug (4) definiert und entsprechend dem Wartungsintervall das Förderfahrzeug (4) im zweiten Betriebsmodus derart ansteuert, dass das Förderfahrzeug (4) über die Aufnahmevorrichtung (38) vom Regallager (2) in das Puffersystem (51; 76) bewegt wird.

## Claims

1. A rack store system (1), having
a rack store (2) having store racks (7a, 7b) which are arranged adjacent to one another and between which at least one rack aisle (8) extends from a first rack store side (9) to a second rack store side (10) and which have storing positions (12) for loads (3) in rack levels (11) which lie one above the other, and
guide tracks (14a, 14b) extending along the rack aisle (8) in the rack levels (11), and at least one autonomous conveyor vehicle (4) which is movable along the guide tracks (14a, 14b) for transporting the loads (3) to the storing positions (12), and
a conveyor vehicle lifting device (6) arranged at the front end before the rack aisle (8) on the second rack store side (10), as well as a control device (78),
the conveyor vehicle lifting device (6) comprising a receiving device (38) which can be raised and lowered by a lift drive (44) connected to the control device (78) for transporting the conveyor vehicle (4), so that in a first operating mode of the control device (78), the conveyor vehicle (14) is relocated between the rack levels (11) via the receiving device (38),
wherein the conveyor vehicle lifting device (6) comprises vertical frame parts (39a, 39b) arranged laterally on both sides of the rack aisle (8) and the receiving device (38) is supported on the frame parts (39a, 39b) by means of guide members (43a, 43b) and forms a guide track (46a, 46b) extending parallel in the direction of the rack aisle (8), **characterized in that** the rack store system (1) has in addition a load lifting device (5) which is arranged on the first rack store side (9) at the front end before the rack store (2) and a buffer system (51; 76) for receiving at least one conveyor vehicle (4) which is equipped with a support frame (52; 77) which has a guide track (54a, 54b) and which is mounted stationarily or installed on a carriage (53) and which is arranged and positionable, respectively, relative to the conveyor vehicle lifting device (6) in such a manner that it is situated in extension of the rack aisle (8), and wherein in a second operating mode of the control device (78), the receiving device (38), which can be raised and lowered relative to the support frame (52; 77) by means of the lift drive (44), is moved to the height level of a transfer level (90; 91), so that the conveyor vehicle (4) is relocated between the receiving device (38), which can be raised and lowered, and the buffer system (51; 76).

2. The rack store system according to claim 1, **characterized in that** the support frame (52; 77) of the buffer system (51; 76) comprises guide tracks (54a, 54b) which extend in horizontal planes that lie one above the other.

3. The rack store system according to claim 1 or 2, **characterized in that** the support frame (52) and the conveyor lifting device (6) comprise coupling elements (59, 60) which can be brought into engagement with one another and by means of which the buffer system (51; 76) can be positioned relative to and with respect to the receiving device (38) and can be locked in a docking position.

4. The rack store system according to anyone of claims 1 to 3, **characterized in that** the buffer system (51; 76) comprises a locking element (75), by means of which the conveyor vehicle (4) can be locked in its buffer position on the guide track (54a, 54b).

5. The rack store system according to any one of claims 1 to 4, **characterized in that** the buffer system (51; 76) comprises at least one energy and/or data supply system (68).

6. The rack store system according to any one of claims 1 to 5, **characterized in that** connected to the control device (78) there is a control means (79) by means of which an electrical control signal and switch command, respectively, can be transmitted to the control device (78) and at least the lift drive (44) of the receiving device (38) can be controlled.

7. A method for operating a rack store system (1) according to claim 1 in an automated manner,
wherein in the first operating mode, the conveyor vehicle (4) is relocated between the rack levels (11) within the rack store (2) via the receiving device (38) by the control device (78) by positioning the receiving device (38) at the height level of a rack level (11) and by moving the conveyor vehicle (4) between the receiving device (38) and the rack level (11), and
wherein in the second operating mode, the receiving device (38) is moved by the control device (78) to a height level of a transfer plane (90; 91) and the conveyor vehicle (4) is moved therein between the buffer system (51; 76) and the receiving device (38) in a direction parallel to the rack aisle (8).

8. The method according to claim 7, **characterized in** tat the conveyor vehicle (4) is moved in an automated manner between the buffer system (51; 76) and the receiving device (38), wherein the transfer movement for the conveyor vehicle (4) between the buffer system (51; 76) and the receiving device (38) is controlled by the control device (78).

9. The method according to claim 7 or 8, **characterized in that** the control device (78) monitors at least one analysis parameter for the rack store (2).

10. The method according to any one of claims 7 to 9, **characterized in that** the control device (78) monitors at least one analysis parameter for the conveyor vehicle (4).

11. The method according to any one of claims 7 to 10, **characterized in that** in the second operating mode, the control device (78) controls the lift drive (44) for the receiving device (38), which can be raised and lowered, and/or the conveyor vehicle (4), provided that an actual value of the analysis parameter reaches a threshold value of the analysis parameter, and the conveyor vehicle (4) is moved onto the buffer system (51; 76).

12. The method according to any one of claims 7 to 10, **characterized in that** in the second operating mode, the control device (78) controls the lift drive (44) for the receiving device (38), which can be raised and lowered, and/or the conveyor vehicle (4), provided that an actual value of the analysis parameter reaches a threshold value of the analysis parameter, and the conveyor vehicle (4) is moved from the buffer system (51; 76) into the rack store (2).

13. The method according to any one of claims 7 to 12, **characterized in that** the transfer of a conveyor vehicle (4) between the receiving device (38) and the buffer system (51; 76) is monitored by a sensor system (80).

14. The method according to any one of claims 7 to 13, **characterized in that** a conveyor vehicle (4) that is transferred from the buffer system (51; 76) into the rack store (2) is registered by the control device (78) and is assigned a distinctive identification.

15. The method according to any one of claims 7 to 14, **characterized in that** the control device (78) defines maintenance intervals for the conveyor vehicle (4) and controls in the second operating mode the conveyor vehicle (4) according to the maintenance interval in such a manner that the conveyor vehicle (4) is moved via the receiving device (38) from the rack store (2) into the buffer system (51; 76).

## Revendications

1. Système de stockage à rayonnages (1) avec un magasin à rayonnages (2) avec des rayonnages (7a, 7b) disposés les uns à côté des autres, entre lesquels s'étend au moins une allée de rayonnages (8) d'un premier côté du magasin à rayonnages (9) vers un deuxième côté du magasin à rayonnages (10) et qui comprennent, dans les plans de rayonnages superposés (11), des emplacements de rangement (12) pour des marchandises (3) et
dans les plans de rayonnages (11), des pistes de guidage (14a, 14b) s'étendant le long de l'allée de rayonnages (8), et
au moins un véhicule de convoyage (4) autonome, mobile le long des pistes de guidage (14a, 14b), pour le transport des marchandises (3) vers les emplacements de rangement (12) et
un dispositif de levage du véhicule de convoyage (6) disposé du côté frontal sur le deuxième côté du magasin à rayonnages (10) avant l'allée de rayonnages (8) et
un dispositif de commande (78),
le dispositif de levage du véhicule de convoyage (6) comprenant un dispositif de logement (38) pouvant être levé et abaissé par un dispositif d'entraînement de levage (44) relié au dispositif de commande (78), pour le transport du véhicule de convoyage (4), de façon à ce que, dans un premier mode de fonctionnement du dispositif de commande (78), le véhicule de convoyage (14) soit déplacé par l'intermédiaire du dispositif de logement (38) entre les plans de rayonnages (11),
le dispositif de levage du véhicule de convoyage (6) comprenant des parties de châssis (39a, 39b) verticales disposées des deux côtés, latéralement par rapport à l'allée de rayonnages (8) et le dispositif de logement (38) étant logé avec des organes de guidage (43a, 43b) au niveau des parties de châssis (39a, 39b) et formant une piste de guidage (46a, 46b) s'étendant parallèlement en direction de l'allée de rayonnages (8), **caractérisé en ce que** le système de stockage à rayonnages (1) comprend en outre un dispositif de levage de marchandises (5) qui est disposé sur le premier côté du magasin à rayonnages (9) sur le côté frontal avant le magasin à rayonnage (2) et un système de tampon (51 ; 76) pour le logement d'au moins un véhicule de convoyage (4) qui est équipé d'un châssis porteur (52 ; 77), avec une piste de guidage (54a, 54b), posé de manière fixe ou réalisé sur un train de roulement (53), et qui est disposé ou peut être positionné par rapport au dispositif de levage du véhicule de convoyage (6) de façon à se trouver dans le prolongement de l'allée de rayonnages (8) et, dans un deuxième mode de fonctionnement du dispositif de commande (78), le dispositif de logement (38) pouvant être levé et abaissé par rapport au châssis porteur (52 ; 77) par le dispositif d'entraînement de levage (44) étant déplacé à hauteur d'un plan de transfert (90 ; 91) de façon à ce que le véhicule de convoyage (4) soit déplacé entre le dispositif de logement levable et abaissable (38) et le système de tampon (51 ; 76).

2. Système de stockage à rayonnages selon la revendication 1, **caractérisé en ce que** le châssis porteur (52 ; 77) du système de tampon (51 ; 76) comprend des pistes de guidage (54a, 54b) s'étendant dans des plans horizontaux superposés.

3. Système de stockage à rayonnages selon la revendication 1 ou 2, **caractérisé en ce que** le châssis porteur (52) et le dispositif de levage du véhicule de convoyage (6) comprend des éléments de couplage (59, 60) pouvant être emboîtés entre eux, au moyen desquels le système de tampon (51 ; 76) peut être positionné par rapport au dispositif de logement (38) et bloqué dans une position d'arrimage.

4. Système de stockage à rayonnages selon l'une des revendications 1 à 3, **caractérisé en ce que** le système de tampon (51 ; 76) comprend un élément de verrouillage (75) au moyen duquel le véhicule de convoyage (4) peut être bloqué dans sa position de tampon sur la piste de guidage (54a, 54b).

5. Système de stockage à rayonnages selon l'une des revendications 1 à 4, **caractérisé en ce que** le système de tampon (51 ; 76) comprend au moins un système d'alimentation en énergie et/ou en données (68).

6. Système de stockage à rayonnages selon l'une des revendications 1 à 5, **caractérisé en ce que**, au dispositif de commande (78) est connecté un moyen de commande (79) permettant d'appliquer au dispositif de commande (78) un signal de commande ou un ordre de commutation électrique et qui permet de contrôler au moins le dispositif d'entraînement de levage (44) du dispositif de logement (38).

7. Procédé d'exploitation automatisée d'un système de stockage à rayonnages (1) selon la revendication 1,
le dispositif de commande (78) déplaçant, dans le premier mode de fonctionnement, le véhicule de convoyage (4) par l'intermédiaire du dispositif de logement (38) à l'intérieur du magasin à rayonnages (2) entre les plans de rayonnages (11) en positionnant le dispositif de logement (38) à la hauteur d'un plan de rayonnage (11) et en déplaçant le véhicule de convoyage (4) entre le dispositif de logement (38) et le plan de rayonnage (11) et
le dispositif de commande (78) déplaçant, dans le deuxième mode de fonctionnement, le dispositif de logement (38) à la hauteur d'un plan de transfert (90 ; 91) et, dans celui-ci, le véhicule de convoyage (4) est déplacé entre le système de tampon (51 ; 76) et le dispositif de logement (38) dans une direction parallèle à l'allée de rayonnages (8).

8. Procédé selon la revendication 7, **caractérisé en ce que** le véhicule de convoyage (4) est déplacé de manière automatisée entre le système de tampon (51 ; 76) et le dispositif de logement (38), le mouvement de transfert pour le véhicule de convoyage (4) entre le système de tampon (51 ; 76) et le dispositif de logement (38) est contrôlé par le dispositif de commande (78).

9. Procédé selon la revendication 7 ou 8, **caractérisé en ce que** le dispositif de commande (78) surveille au moins un paramètre d'analyse pour le magasin à rayonnages (2).

10. Procédé selon l'une des revendications 7 à 9, **caractérisé en ce que** le dispositif de commande (78) surveille au moins un paramètre d'analyse pour le véhicule de convoyage (4).

11. Procédé selon l'une des revendications 7 à 10, **caractérisé en ce que** le dispositif de commande (78) contrôle, dans le deuxième mode de fonctionnement, le dispositif d'entraînement de levage (44) pour le dispositif de logement (38) levable et abaissable et/ou le véhicule de convoyage (4) si une valeur réelle d'un paramètre d'analyse atteint une valeur limite de paramètre d'analyse et déplace le véhicule de convoyage (4) vers le système de tampon (51 ; 76).

12. Procédé selon l'une des revendications 7 à 10, **caractérisé en ce que** le dispositif de commande (78) contrôle, dans le deuxième mode de fonctionnement, le dispositif d'entraînement de levage (44) pour le dispositif de logement (38) levable et abaissable et/ou le véhicule de convoyage (4) si une valeur réelle d'un paramètre d'analyse atteint une valeur limite de paramètre d'analyse et déplace le véhicule de convoyage (4) du système de tampon (51 ; 76) vers le magasin à rayonnages (2).

13. Procédé selon l'une des revendications 7 à 12, **caractérisé en ce que** le transfert d'un véhicule de convoyage (4) entre le dispositif de logement (38) et le système de tampon (51 ; 76) est surveillé par des capteurs (80).

14. Procédé selon l'une des revendications 7 à 13, **caractérisé en ce qu'**un véhicule de convoyage (4), qui est transféré du système de tampon (51 ; 76) vers le magasin à rayonnages (2), est détecté par le dispositif de commande (78) et un identifiant unique lui est attribué.

15. Procédé selon l'une des revendications 7 à 14, **caractérisé en ce que** le dispositif de commande (78) définit des intervalles de maintenance pour le véhicule de convoyage (4) et contrôle, en fonction de l'intervalle de maintenance, le véhicule de convoyage (4), dans le deuxième mode de fonctionnement, de façon à ce que le véhicule de convoyage (4) soit déplacé par l'intermédiaire du dispositif de logement (38) du magasin à rayonnages (2) vers le système de tampon (51 ; 76).
